# EUROPÄISCHE PATENTSCHRIFT

(11) **EP 1 261 916 B1**
(45) Veröffentlichungstag und Bekanntmachung des Hinweises auf die Patenterteilung: **02.04.2008**
(21) Anmeldenummer: 01913656.3
(22) Anmeldetag: 14.02.2001
(51) Int. Cl.: G06F 9/38

(54) **PROGRAMMGESTEUERTE EINHEIT MIT EINER PREFETCH-EINHEIT**
PROGRAM-CONTROLLED UNIT COMPRISING A PREFETCH UNIT
UNITE COMMANDEE PAR PROGRAMME A UNITE DE LECTURE ANTICIPEE

(30) Priorität: 29.02.2000 DE 10009677
(43) Veröffentlichungstag der Anmeldung: 04.12.2002
(73) Patentinhaber: Infineon Technologies AG, 81669 München (DE)
(72) Erfinder: SONNEKALB, Steffen, 81673 München (DE); BIRKHÄUSER, Jürgen, 81735 München (DE)
(74) Vertreter: Repkow, Ines
(86) Internationale Anmeldenummer: PCT/DE2001/000584
(87) Internationale Veröffentlichungsnummer: WO 2001/065361

(56) Entgegenhaltungen:
- WO-A-96/08769
- US-A- 5 768 576
- US-A- 5 881 278
- US-A- 5 964 868
- US-A- 6 021 489

## Beschreibung

Die vorliegende Erfindung betrifft eine programmgesteuerte Einheit gemäß dem oberbegriff des Patentanspruchs 1.

Solche programmgesteuerte Einheiten sind beispielsweise Mikroprozessoren oder Mikrocontroller, die nach dem Pipeline-Prinzip arbeiten.

Bei nach dem Pipeline-Prinzip arbeitenden programmgesteuerten Einheiten werden auszuführende Befehle in mehreren aufeinanderfolgenden Teilschritten abgearbeitet, wobei gleichzeitig für verschiedene Befehle verschiedene Teilschritte ausgeführt werden können. Das heißt, während für einen x-ten Befehl der n-te Teilschritt ausgeführt wird, wird gleichzeitig für einen danach auszuführenden, (x+1)-ten Befehl der (n-1)-te Teilschritt ausgeführt, für einen danach auszuführenden, (x+2)-ten Befehl der (n-2)-te Teilschritt ausgeführt, usw. In wie vielen Teilschritten die Befehle ausgeführt werden, ist in der Praxis unterschiedlich und kann prinzipiell beliebig festgelegt werden.

Nach dem Pipeline-Prinzip arbeitende programmgesteuerte Einheiten können die von Ihnen auszuführenden Befehle in sehr schneller Aufeinanderfolge ausführen und dabei dennoch relativ einfach aufgebaut sein; insbesondere ist es, obgleich gleichzeitig an mehreren Befehlen gearbeitet werden kann, nicht erforderlich, zur Befehlsausführung benötigte Einheiten mehrfach vorzusehen.

Der Geschwindigkeitsvorteil, der sich durch nach dem Pipeline-Prinzip arbeitende programmgesteuerte Einheiten erzielen läßt, kann bei Befehlen, deren Ausführung einen Sprung zur Folge hat, entfallen. Wenn nämlich in der Befehlsabarbeitungs-Pipeline auf einen Befehl, der einen Sprung zur Folge hat oder haben kann, nicht die Befehle folgen, die nach diesem auszuführen sind, so muß die Ausführung von Befehlen unterbrochen werden, bis die Befehle, die nach dem Befehl auszuführen sind, der einen Sprung zur Folge hat oder haben kann, aus dem Programmspeicher ausgelesen sind und die vorhandenen Pipeline-Stufen bis zu der Pipeline-Stufe, in welcher die Befehle ausgeführt werden, durchlaufen haben. Dadurch können nach Befehlen, deren Ausführung einen Sprung zur Folge hat oder haben kann, lange Pausen in der Befehlsausführung entstehen.

Dieses Problem läßt sich teilweise beseitigen, wenn eine der ersten Pipeline-Stufen, vorzugsweise gleich die erste Pipeline-Stufe, welche im allgemeinen durch eine sogenannte Prefetch-Einheit gebildet wird,
- die Befehle nach Befehlen durchsucht, deren Ausführung einen Sprung zu Folge hat oder haben kann,
- für die dabei gefundenen Befehle vorhersagt, ob deren Ausführung einen Sprung zur Folge haben wird oder nicht, und
- abhängig vom Vorhersage-Ergebnis so weiterarbeitet, daß nach einem Befehl, dessen Ausführung einen Sprung zur Folge hat oder haben kann, derjenige Befehl zur Abholung durch die die Befehle weiterverarbeitende Einheit bereitgestellt wird, der laut Vorhersage danach auszuführen ist.

Bei einer solchen programmgesteuerten Einheiten kommt es im allgemeinen wesentlich seltener vor, daß nach einem Befehl, dessen Ausführung einen Sprung zur Folge hat oder haben kann, Pausen in der Befehlsausführung auftreten.

Allerdings kann es auch bei solchen programmgesteuerten Einheiten zu den besagten Pausen kommen. Dies ist insbesondere dann der Fall, wenn nicht mit Bestimmtheit vorhergesagt werden kann, ob ein Befehl, dessen Ausführung einen Sprung, zur Folge hat oder haben kann, tatsächlich einen Sprung zur Folge haben wird, und/oder wenn das Sprungziel nicht oder nicht mit Bestimmtheit vorhergesagt werden kann.

Eine programmgesteuerte Einheit gemäß dem Oberbegriff des Patentanspruchs 1 ist aus Dokument US 5,881,278 bekannt.

Der vorliegenden Erfindung liegt daher die Aufgabe zugrunde, die programmgesteuerte Einheit gemäß dem Oberbegriff des Patentanspruchs 1 derart weiterzubilden, daß sich die Pausen, die nach der Ausführung eines Befehls, der einen Sprung zur Folge hat oder haben kann, auftreten können, vermeiden oder verkürzen lassen.

Diese Aufgabe wird erfindungsgemäß durch die im kennzeichnenden Teil des Patentanspruchs 1 beanspruchten Merkmale Die genannten Merkmale erweisen sich als vorteilhaft, wenn - wie beispielsweise bei einem Return-Befehl - für einen Befehl, der einen Sprung zur Folge hat oder haben kann, nicht vorhergesagt werden kann, wohin ein gegebenenfalls auszuführender Sprung erfolgt.

Bei der programmgesteuerten Einheit gemäß Patentanspruch 1, können Befehle, sofern sie zum Zeitpunkt der Anforderung in der Prefetch-Einheit noch nicht zu Verfügung stehen, früher als üblich angefordert und/oder aus dem Programmspeicher geholt werden.

Dadurch lassen sich die Pausen, die nach der Ausführung eines Befehls, der einen Sprung zur Folge hat oder haben kann, entweder ganz vermeiden oder auf ein Minimum reduzieren.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: eine schematische Darstellung der vorliegend besonders interessierenden Teile der nachfolgend beschriebenen programmgesteuerten Einheit, und
- Figur 2: das Format der Einträge, die in einem Return-Stack gemäß Figur 1 speicherbar sind.

Die im folgenden näher beschriebene programmgesteuerte Einheit ist ein Mikroprozessor oder ein Mikrocontroller. Es könnte sich jedoch auch um eine beliebige andere programmgesteuerte Einheit handeln, durch welche in einem Programmspeicher gespeicherte Befehle sequentiell ausführbar sind.

Der Vollständigkeit halber sei darauf hingewiesen, daß von der betrachteten programmgesteuerten Einheit nur die vorliegend besonders interessierenden Bestandteile, d.h. vor allem die Befehlsabarbeitungs-Pipeline derselben gezeigt und beschrieben sind.

Die betrachtete programmgesteuerte Einheit arbeitet nach dem Pipeline-Prinzip. Bei nach dem Pipeline-Prinzip arbeitenden programmgesteuerten Einheiten werden auszuführende Befehle in mehreren aufeinanderfolgenden Teilschritten abgearbeitet, wobei gleichzeitig für verschiedene Befehle verschiedene Teilschritte ausgeführt werden können. Das heißt, während für einen x-ten Befehl der n-te Teilschritt ausgeführt wird, wird gleichzeitig für einen danach auszuführenden, (x+1)-ten Befehl der (n-1)-te Teilschritt ausgeführt, für einen danach auszuführenden, (x+2)-ten Befehl der (n-2)-te Teilschritt ausgeführt, usw.

Im betrachteten Beispiel kommt eine vierstufige Pipeline zum Einsatz. Das heißt, die Abarbeitung der von der programmgesteuerten Einheit auszuführenden Befehle erfolgt in vier Teilschritten.

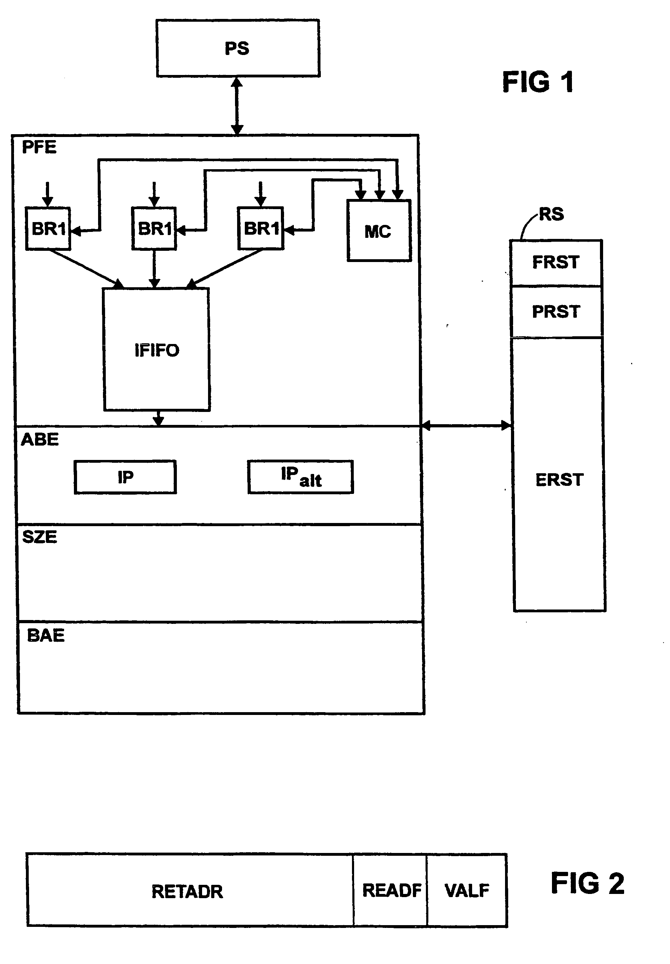

Der prinzipielle Aufbau einer solchen Befehlsabarbeitungs-Pipeline ist schematisch in Figur 1 dargestellt.

Die vier Pipeline-Stufen werden im betrachteten Beispiel durch eine Prefetch-Einheit PFE, eine Adreßberechnungs-Einheit ABE, eine Speicherzugriffs-Einheit SZE, und eine Befehlsausführungs-Einheit BAE gebildet.

Die Prefetch-Einheit PFE holt Befehle repräsentierende Daten aus einem innerhalb oder außerhalb der programmgesteuerten Einheit vorgesehenen Programmspeicher PS, extrahiert daraus die darin enthaltenen Befehle, schreibt diese in Befehlsregister BR1 bis BR3, und transferiert sie von dort in eine Befehlsspeichereinrichtung IFIFO. Die Prefetch-Einheit der vorliegend betrachteten programmgesteuerten Einheit
- holt die Daten aus dem Programmspeicher PS in Einheiten von 8 Bytes aus diesem,
- kann pro Taktperiode bis zu drei Befehle aus diesen Daten extrahieren,
- verfügt über drei Befehlsregister BR1 bis BR3, und
- weist als Befehlsspeichereinrichtung IFIFO eine Speichereinrichtung auf, die im Normalfall wie ein FIFO-Speicher (ein instruction FIFO) betreibbar und verwendbar ist, und die in besonderen Fällen, genauer gesagt dann, wenn es sich als vorteilhaft erweist, daß in der Befehlsspeichereinrichtung gespeicherte Befehle ohne ein wiederholtes Einschreiben dieser Befehle in die Befehlsspeichereinrichtung wiederholt aus dieser ausgelesen werden, was, wie später noch genauer beschrieben wird, eine besonders effiziente Ausführung von wiederholt auszuführenden Schleifen ermöglicht, wie ein Cache-Speicher betreibbar und verwendbar ist.

Es dürfte einleuchten, daß auf die genannten Details zum Aufbau der Prefetch-Einheit keine Einschränkung besteht.

Die in die Befehlsspeichereinrichtung IFIFO geschriebenen Befehle können durch die nächste Pipeline-Stufe (die Adreßberechnungs-Einheit) sequentiell aus der Befehlsspeichereinrichtung IFIFO geholt und weiterverarbeitet werden.

Darüber hinaus durchsucht die Prefetch-Einheit die Befehle nach Befehlen, deren Ausführung einen Sprung zur Folge haben oder haben können. Wenn ein solcher Befehl gefunden wird, trifft die Prefetch-Einheit eine Vorhersage darüber, ob die Ausführung dieses Befehls einen Sprung zur Folge haben wird, und, falls vorhergesagt wird, daß ein Sprung ausgeführt werden wird, wohin dieser Sprung erfolgt. Wenn die Prefetch-Einheit das Sprungziel ermitteln kann, setzt sie das Holen von Befehlen repräsentierenden Daten aus dem Programmspeicher PS an der das Sprungziel repräsentierenden Adresse fort, verarbeitet diese Daten wie vorstehend beschriebenen, und schreibt die dabei erhaltenen Befehle schließlich in die Befehlsspeichereinrichtung IFIFO, wodurch sich dort an einen Befehl, dessen Ausführung einen Sprung zur Folge hat oder haben kann, in der Regel die Befehle anschließen, die nach diesem auszuführen sind.

Die in der Befehlsspeichereinrichtung IFIFO gespeicherten Befehle werden von der sich an die Prefetch-Einheit PFE anschließende Pipeline-Stufe, im betrachteten Beispiel also von der Adreßberechnungs-Einheit ABE der Reihe nach ausgelesen und in dieser und den weiteren Pipeline-Stufen weiterverarbeitet. Die Befehlsspeichereinrichtung IFIFO wird dabei wie ein FIFO-Speicher betrieben und verwendet, so daß die darin gespeicherten Befehle in der Reihenfolge ausgelesen werden, in der sie dort eingeschrieben wurden.

Die Adreßberechnungs-Einheit ABE berechnet - sofern es erforderlich ist - für jeden Befehl die Adressen, die zur Ausführung des betreffenden Befehls oder eines später auszuführenden Befehls von einer der vorhandenen Pipeline-Stufen benötigt werden.

Die Speicherzugriffs-Einheit SZE holt - sofern es erforderlich ist - für jeden Befehl die in einer (Daten-) Speichereinrichtung gespeicherten Daten, die zur Ausführung des betreffenden Befehls benötigt werden, also beispielsweise Operanden des betreffenden Befehls.

Die Befehlsausführungs-Einheit BAE führt die Befehle schließlich aus.

In der Figur 1 sind außer den genannten Einrichtungen ferner eine erste Speichereinrichtung RS und eine zweite Speichereinrichtung MC gezeigt. Auf diese Speichereinrichtungen wird später noch genauer eingegangen.

Die betrachtete programmgesteuerte Einheit zeichnet sich unter anderem durch das Vorhandensein einer Rücksprungadressen-Speichereinrichtung aus, in welcher die Adressen der Befehle gespeichert werden, die nach Befehlen auszuführen sind, die die Fortsetzung einer durch die Ausführung anderer Befehle vorübergehend unterbrochenen Abarbeitung einer Befehlsfolge veranlassen.

Ein Befehl, dessen Ausführung die Fortsetzung einer durch die Ausführung anderer Befehle vorübergehend unterbrochenen Abarbeitung einer Befehlsfolge veranlaßt, ist beispielsweise ein sogenannter Return-Befehl. Ein Befehl, der die Unterbrechung der Ausführung einer Befehlsfolge zur Folge hat, ist beispielsweise ein sogenannter Call-Befehl.

Durch einen Call-Befehl wird die Ausführung eines Unterprogrammes veranlaßt; durch den auf den Call-Befehl folgenden Return-Befehl wird ein Rücksprung von dem durch den Call-Befehl aufgerufenen Unterprogramm zum Hauptprogramm oder einem anderen Unterprogramm bewirkt.

Es sei bereits an dieser Stelle darauf hingewiesen, daß keine Einschränkung auf die genannten Beispiele besteht. Die Befehle, deren Ausführung einen Rücksprung zur Folge hat, können auch andere Befehle als die genannten Return-Befehle sein, und müssen auch nicht einen Rücksprung von einem Unterprogramm ins Hauptprogramm oder in ein anderes Unterprogramm darstellen; es könnte sich beispielsweise auch um einen Rücksprung von einer Interrupt Service Routine zu der Stelle, an welcher das eigentlich auszuführende Programm unterbrochen wurde, handeln.

Gleichwohl werden im folgenden der Einfachheit halber
- die Befehle, die die Fortsetzung einer durch die Ausführung anderer Befehle vorübergehend unterbrochenen Abarbeitung einer Befehlsfolge veranlassen, als Return-Befehle bezeichnet, und
- die Befehle, die die Unterbrechung der Ausführung einer Befehlsfolge zur Folge haben, als Call-Befehle bezeichnet.

Die Speichereinrichtung, in welcher die Adressen der Befehle gespeichert werden, die nach einem Return-Befehl auszuführen sind, ist im betrachteten Beispiel die vorstehend bereits erwähnte erste Speichereinrichtung RS und wird im folgenden als Return-Stack bezeichnet.

Die Adressen der Befehle, bei welchen die Programmausführung nach Return-Befehlen fortzusetzen ist, werden üblicherweise zusammen mit weiteren Daten (insbesondere Inhalten von Registern, die diese vor der Unterbrechung des Programmes aufwiesen und bei der Fortsetzung des Programms wieder aufweisen müssen) im "normalen" System-Stack gespeichert.

Dieser System-Stack wird trotz der teilweisen Überschneidung mit dem Inhalt des Return-Stack RS unverändert beibehalten und verwendet; der Return-Stack wird zusätzlich zum System-Stack vorgesehen. Der Return-Stack ist aber kein zweiter System Stack: in ihm werden ausschließlich die Adressen der Befehle, bei welchen die Programmausführung nach Return-Befehlen, fortzusetzen ist, und gegebenenfalls Daten zur Verwaltung der Return-Stack-Einträge gespeichert.

Der Return-Stack unterscheidet sich vom System-Stack ferner dadurch, daß er nicht nur durch die Befehlsausführungs-Einheit, sondern auch durch andere Befehlsabarbeitungs-Pipeline-Stufen beschrieben und/oder ausgelesen werden kann. Dadurch ist es möglich, daß beim Auftreten eines Return-Befehls bereits die Prefetch-Einheit feststellen kann, wohin der durch den Return-Befehl bewirkte Rücksprung zu erfolgen hat.

Bei programmgesteuerten Einheiten, bei welchen die Adressen der Befehle, die nach Return-Befehlen auszuführen sind, "nur" im System-Stack gespeichert werden, ist dies nicht oder allenfalls mit einem unverhältnismäßig großen Aufwand möglich.

Einer der Gründe hierfür liegt darin, daß die Einträge in den System-Stack üblicherweise durch die Befehlsausführungs-Einheit vorgenommen werden, denn häufig steht erst in dieser Stufe fest, ob und wie die jeweiligen Befehle ausgeführt werden. Dadurch kann es passieren, daß zum Zeitpunkt, zu welchem die Prefetch-Einheit einen Return-Befehl findet, noch kein zugeordneter Rücksprungadressen-Eintrag im System-Stack existiert (weil der Call-Befehl, dem der betreffende Return-Befehl zugeordnet ist die Befehlsausführungs-Einheit noch nicht erreicht hat).

Erschwerend kommt hinzu, daß - wie vorstehend bereits erwähnt wurde - im System-Stack nicht nur die Adressen der Befehle gespeichert sind, die nach Return-Befehlen auszuführen sind, sondern auch noch weitere Daten wie beispielsweise Registerinhalte gespeichert werden, wodurch es insbesondere dann, wenn der System-Stack wie allgemein üblich durch einen LIFO-Speicher gebildet wird, für die Prefetch-Einheit sehr schwierig und aufwendig ist, ohne Veränderung des System-Stack-Inhalts an die Adressen der Befehle heranzukommen, die nach Return-Befehlen auszuführen sind.

Der Return-Stack setzt sich im betrachteten Beispiel aus drei Teilen zusammen. Diese drei Teile sind in der Figur 1 mit FRST, PRST, und ERST bezeichnet.

In jedem der drei Return-Stack-Teile werden Adressen von Befehlen eingetragen, die nach Return-Befehlen auszuführen sind. Die Einträge in die mehreren Return-Stack-Teile erfolgen jedoch in verschiedenen Phasen der Befehlsabarbeitung und werden durch unterschiedliche Ereignisse ausgelöst.

Wie später noch besser verstanden werden wird, lassen sich durch die Aufteilung des Return-Stack in mehrere Teile Return-Stack-Einträge, die aufgrund eines Fehlers bei der Vorhersage darüber, ob ein Befehl, der einen Sprung zur Folge haben kann, tatsächlich einen Sprung zur Folge haben wird, erfolgt sind, leichter handhaben.

Im betrachteten Beispiel sind der FRST-Teil und der PRST-Teil des Return-Stack jeweils für einen einzigen Eintrag, und der ERST-Teil für mehrere (vorliegend für 4) Einträge ausgelegt. Es dürfte einleuchten, daß die jeweiligen Anzahlen der möglichen Einträge in die einzelnen Return-Stack-Teile unabhängig voneinander beliebig groß sein können.

Der ERST-Teil des Return-Stack ist im betrachteten Beispiel als eine LIFO-Speichereinrichtung oder als eine sich wie eine LIFO-Speichereinrichtung verhaltende Speichereinrichtung ausgebildet.

Figur 2 zeigt das Format der Return-Stack-Einträge. Demnach besteht jeder Return-Stack-Eintrag aus
- der Adresse RETADR des Befehls, der nach einem Return-Befehl auszuführen ist (diese Adresse wird im folgenden als Rücksprungadresse RETADR bezeichnet),
- einer Gültigkeits-Kennung VALF, welche anzeigt, ob der betreffende Return-Stack-Eintrag gültig ist, und
- einer Lese-Kennung READF, welche anzeigt, ob der betreffende Eintrag schon für einen Return-Befehl verwendet wurde.

Der Return-Stack RS wird im betrachteten Beispiel folgendermaßen verwendet:

Wenn in die Befehlsspeichereinrichtung IFIFO ein Call-Befehl eingetragen wird, wird in den FRST-Teil des Return-Stack RS die Adresse des Befehls eingetragen, welcher nach dem Auftreten des zugeordneten Return-Befehls auszuführen ist. Dieser Befehl ist der Befehl, der im Programmspeicher nach dem Call-Befehl gespeichert ist. Der betreffende FRST-Teil-Eintrag wird durch ein Setzen der Gültigkeits-Kennung VALF als gültig markiert und durch ein Zurücksetzen der Lese-Kennung READF als ungelesen markiert.

Wenn und so lange der FRST-Teil des Return-Stack RS vollständig mit durch die Gültigkeits-Kennung VALF als gültig gekennzeichneten Einträgen belegt ist, kann kein weiterer Call-Befehl in die Befehlsspeichereinrichtung IFIFO eingetragen werden. Der FRST-Eintrag wird erst als ungültig markiert, wenn der Call-Befehl, für den der betreffende Eintrag erfolgt ist, von der Adreßberechnungs-Einheit in die Speicherzugriffs-Einheit gelangt.

Wenn der Call-Befehl in die Adreßberechnungs-Einheit gelangt, wird dessen Adresse in einem Befehlsadreß-Register IP gespeichert; die ins Befehlsadreß-Register IP geschriebene Befehlsadresse erhält die Adreßberechnungs-Einheit von der Prefetch-Einheit oder aus einer selbst durchgeführten Ermittlung. In der Adreßberechnungs-Einheit existiert darüber hinaus auch noch ein alternatives Befehlsadreß-Register IPₐₗₜ. In dieses alternative Befehlsadreß-Register IPₐₗₜ wird ebenfalls eine Befehlsadresse geschrieben. Allerdings nicht wie im Fall des Befehlsadreß-Registers IP für jeden Befehl, der in die Adreßberechnungs-Einheit gelangt, sondern nur wenn in die Adreßberechnungs-Einheit ein Befehl gelangt, der einem Befehl folgt, der einen Sprung zur Folge hat oder haben kann. Die Befehlsadresse, die in diesem Fall in das alternative Befehlsadreß-Register IPₐₗₜ geschrieben wird, ist die Adresse des Befehls, bei welchem die Programmausführung nach dem vorhergehenden Befehl fortgesetzt werden müßte, wenn die in der Prefetch-Einheit getroffene Vorhersage darüber, ob der betreffende Befehl einen Sprung zur Folge hat, nicht richtig wäre.

Beim Befehl, der nach dem Call-Befehl in die Adreßberechnungs-Einheit gelangt (dieser Befehl wird im folgenden der Einfachheit halber als Call-Folgebefehl bezeichnet), wird demnach
- ins Befehlsadreß-Register IR die Adresse des Call-Folgebefehls, und
- ins alternative Befehlsadreß-Register IPₐₗₜ die Adresse des Befehls, bei welchem die Programmausführung fortgesetzt werden müßte, wenn die in der Prefetch-Einheit getroffene Vorhersage darüber, ob der vorhergehende Call-Befehl einen Sprung zur Folge hat, nicht richtig wäre,
geschrieben.

Die ins alternative Befehlsadreß-Register IPₐₗₜ geschriebene Befehlsadresse ist - bei richtiger Vorhersage darüber, ob der Call-Befehl einen Sprung zur Folge haben wird oder nicht - zugleich die Adresse des Befehls, bei welchem die Programmausführung beim Auftreten des dem Call-Befehl zugeordneten Return-Befehls fortgesetzt werden müßte.

Im betrachteten Beispiel ist - obgleich dies in den Figuren nicht gezeigt ist - das alternative Befehlsadreß-Register IPₐₗₜ Bestandteil des PRST-Teils des Return-Stack. Genauer gesagt wird das alternative Befehlsadreß-Register IPₐₗₜ als der RETADR-Teil des PRST-Teils des Return-Stack verwendet. Auf diese Weise läßt sich der Return-Stack mit minimalem Aufwand praktisch realisieren. Es sei jedoch bereits an dieser Stelle darauf hingewiesen, daß hierauf keine Einschränkung besteht; das alternative Befehlsadreß-Register IPₐₗₜ und der PRST-Teil des Return-Stack können auch als separate Einheiten gebildet werden.

Im betrachteten Beispiel wird damit beim Call-Folgebefehl ins RETADR-Feld des PRST-Teils des Return-Stack die Adresse des Befehls geschrieben, bei welchem - bei richtiger Vorhersage darüber, ob der Call-Befehl einen Sprung zur Folge hat - die Programmausführung beim Auftreten des dem Call-Befehl zugeordneten Return-Befehls fortgesetzt werden müßte.

Während sich der Call-Folgebefehl in der Adreßberechnungs-Einheit befindet, befindet sich der Call-Befehl bereits in der Speicherzugriffs-Einheit. Die betrachtete programmgesteuerte Einheit ist so aufgebaut, daß bereits in der Speicherzugriffs-Einheit entschieden wird, ob und wie der Call-Befehl ausgeführt wird. Wenn sich dabei herausstellt, daß die hierüber in der Prefetch-Einheit gemachte Vorhersage zutreffend war, wird der Inhalt des PRST-Teils des Return-Stack in den ERST-Teil desselben transferiert. Der neue Eintrag im ERST-Teil des Return-Stack wird durch Setzen der entsprechenden Kennungen oder durch Übernahme (Mitübertragung) der Kennungen aus dem PRST-Teil als gültig und ungelesen gekennzeichnet. Gleichzeitig werden die sich auf den betreffenden Call-Befehl beziehenden FRST- und PRST-Einträge des Return-Stack als ungültig und gelesen markiert.

Wenn festgestellt wird, daß der Call-Befehl nicht ausgeführt wird oder entgegen der Vorhersage keinen Unterprogrammaufruf zur Folge hat,
- wird der PRST-Teil-Inhalt nicht in den ERST-Teil transferiert, und
- werden die Einträge in den FRST- und PRST-Teilen des Return-Stack als ungültig markiert.

Darüber hinaus dürfen der in der Adreßberechnungs-Einheit.befindliche Call-Folgebefehl und die noch in der Befehlsspeichereinrichtung IFIFO bereitgestellten Befehle nicht ausgeführt werden; statt dessen müssen die tatsächlich auszuführenden Befehle aus dem Programmspeicher ausgelesen, verarbeitet und ausgeführt werden.

Bei ineinander verschachtelten Call-Return-Sequenzen, genauer gesagt wenn die Verschachtelungstiefe größer ist als die maximale Anzahl der möglichen ERST-Teil-Einträge, können im ERST-Teil nicht alle Rücksprungadressen gespeichert werden. In diesem Fall wird der jeweils älteste ERST-Eintrag überschrieben.

Wenn in der Prefetch-Einheit ein Return-Befehl entdeckt wird, wird zunächst im FRST-Teil des Return-Stack nachgesehen, ob sich darin ein gültiger und noch nicht ausgelesener Eintrag befindet. Wenn dies der Fall ist, enthält dieser Eintrag, genauer gesagt des RETADR-Feld desselben die Adresse des Befehls, bei welchem die Programmausführung nach dem Return-Befehl fortzusetzen ist (die dem betreffenden Return-Befehl zugeordnete Rücksprungadresse).

Wenn im FRST-Teil des Return-Stack kein entsprechender Eintrag vorhanden ist, wird im PRST-Teil des Return-Stack nachgesehen, ob dort ein gültiger und noch nicht gelesener Eintrag vorhanden ist. Wenn dies der Fall ist, enthält dieser Eintrag, genauer gesagt das RETADR-Feld desselben die Adresse des Befehls, bei welchem die Programmausführung nach dem Return-Befehl fortzusetzen ist (die dem betreffenden Return-Befehl zugeordnete Rücksprungadresse).

Wenn auch im PRST-Teil des Return-Stack kein entsprechender Eintrag vorhanden ist, wird der zuletzt in den ERST-Teil des Return-Stack geschriebene und noch nicht ausgelesene Eintrag, genauer gesagt der Inhalt des RETADR-Feldes desselben als die dem Return-Befehl zugeordnete Rücksprungadresse verwendet.

Der Return-Stack-Eintrag, der zur Ermittlung der dem Return-Befehl zugeordneten Rücksprungadresse verwendet wird, wird als gelesen markiert, bleibt aber noch gültig. Die Gültigkeits-Kennung VALF wird erst in einen einen ungültigen Zustand des Eintrages anzeigenden Zustand versetzt, wenn feststeht, daß der Return-Befehl tatsächlich ausgeführt wird (im betrachteten Beispiel ist dies der Fall, wenn der Return-Befehl in die Befehlsausführungs-Einheit gelangt).

Wenn eine Fehlvorhersage vorliegt, das heißt, wenn der in der Prefetch-Einheit gefundene Return-Befehl nicht ausgeführt wird, werden alle Lese-Kennungen der gültigen ERST-Einträge des Return-Stack in einen einen ungelesenen Zustand des Eintrages anzeigenden Zustand versetzt.

Um mit Sicherheit ausschließen zu können, daß eine Rücksprungadresse verwendet wird, die - beispielsweise weil das ausgeführte Programm den System-Stack manipuliert hat - nicht mit der im System-Stack gespeicherten Rücksprungadresse übereinstimmt, kann vorgesehen werden, die aus dem Return-Stack erhaltene Rücksprungadresse mit der im System-Stack gespeicherten Rücksprungadresse zu vergleichen, sobald letztere wie bei Return-Befehlen üblich aus dem System-Stack ausgelesen wurde. Der Vergleich erfolgt vorzugsweise parallel zu den Vorbereitungen für die (in der Befehlsausführungs-Einheit erfolgende) Ausführung des durch die aus dem Return-Stack stammenden Rücksprungadresse spezifizierten Befehls, so daß durch den Vergleich keine Verzögerung oder Unterbrechung der Befehlsabarbeitung entsteht. Wenn beim Vergleich der Rücksprungadressen festgestellt wird, daß keine Übereinstimmung vorliegt, wird die Abarbeitung der in der Befehlsabarbeitungs-Pipeline befindlichen Befehle unterbunden, und es werden die tatsächlich auszuführenden Befehle, d.h. die durch die aus dem System-Stack stammende Rücksprungadresse spezifizierten Befehle aus dem Programmspeicher geholt und ausgeführt.

Wenn im Return-Stack kein gültiger Eintrag gefunden wird, was beispielsweise der Fall sein kann, wenn der ERST-Teil des Return-Stack zu klein ist, schreibt die Prefetch-Einheit den Return-Befehl, für den sie die zugeordnete Rücksprungadresse suchte, in die Befehlsspeichereinrichtung IFIFO und unterbricht dann das Holen weiterer Befehle aus dem Programmspeicher, bis sich der betreffende Return-Befehl in der Befehlsausführungs-Einheit befindet. In der Befehlsausführungs-Einheit kann die dem Return-Befehl zugeordnete Rücksprungadresse aus dem System-Stack ermittelt werden. Im Anschluß daran unterbricht die Befehlsausführungs-Einheit ihre Arbeit, denn die Befehle, bei welchen die Programmausführung nach dem Return-Befehl fortzusetzen ist, sind ja noch nicht in der Befehlsabarbeitungs-Pipeline vorhanden. Nach der Ermittlung der dem Return-Befehl zugeordneten Rücksprungadresse aus dem System-Stack kann die Prefetch-Einheit ihre Arbeit unter Verwendung dieser Rücksprungadresse fortsetzen. Dabei werden die unter der Rücksprungadresse gespeicherten Befehle aus dem Programmspeicher geholt und wie beschrieben weiterverarbeitet. Wenn der Return-Folgebefehl in die Befehlsausführungs-Einheit gelangt, nimmt diese ihre Arbeit wieder auf und führt die erhaltenen Befehle aus.

Wie aus den vorstehenden Erläuterungen ersichtlich ist, ermöglicht es das Vorsehen eines Return-Stack, daß die Pausen, die bislang beim Auftreten von Return-Befehlen in Kauf genommen werden mußten, gänzlich eliminierbar sind; nur wenn der Return-Stack nicht ausreichend groß ist, müssen unter Umständen bei bestimmten Return-Befehlen Pausen in der Befehlsausführung in Kauf genommen werden.

Die vorliegend betrachtete programmgesteuerte Einheit zeichnet sich ferner dadurch aus, daß sie eine Alternativbefehlsspeichereinrichtung aufweist, in welche im Fall, daß für einen Befehl vorhergesagt wurde, daß dessen Ausführung einen Sprung zur Folge hat, Daten eingeschrieben werden, die Befehle repräsentieren, welche auszuführen wären, wenn kein Sprung ausgeführt werden würde.

Diese Speichereinrichtung ist die vorstehend bereits erwähnte und nachfolgend als Alternativbefehlsspeichereinrichtung bezeichnete zweite Speichereinrichtung MC.

Die betrachtete programmgesteuerte Einheit weist sowohl einen Return-Stack RS als auch eine Alternativbefehlsspeichereinrichtung MC auf. Es sei jedoch bereits an dieser Stelle darauf hingewiesen, daß hierauf keine Einschränkung besteht. Der Return-Stack RS und die Alternativbefehlsspeichereinrichtung MC können auch jeweils allein vorgesehen werden und sind unabhängig voneinander betreibbar.

Die Alternativbefehlsspeichereinrichtung MC ist im betrachteten Beispiel Bestandteil der Prefetch-Einheit. Sie wird durch einen Cache-Speicher gebildet, der nur für einige wenige (beispielsweise für nur drei) Einträge ausgelegt ist und dadurch besonders schnelle, das heißt ohne Wartezyklen erfolgende Zugriffe ermöglicht, was bei einem großen Allround-Cache nicht möglich wäre.

Wenn für einen Befehl, der einen Sprung zur Folge hat oder haben kann, vorhergesagt wird, daß ein Sprung ausgeführt wird, werden die Befehle, die die Prefetch-Einheit bereits aus dem Programmspeicher PS ausgelesen hat, und welche nicht die Befehle sind, die nach dem vorhergesagten Sprung auszuführen sind, nicht wie bisher gelöscht oder überschrieben, sondern in die Alternativbefehlsspeichereinrichtung MC geschrieben. Im betrachteten Beispiel werden die Befehle, die bereits in den Befehlsregistern BR1 bis BR3 der Prefetch-Einheit gespeichert sind, aber wegen des voraussichtlich ausgeführten Sprunges nicht in die Befehlsspeichereinrichtung IFIFO gespeichert werden, in die Alternativbefehlsspeichereinrichtung MC geschrieben. Wie später noch besser verstanden werden wird, besteht hierauf keine Einschränkung. Wichtig ist "nur", daß Befehle repräsentierende Daten, die bereits in die Prefetch-Einheit geholt wurden, nicht einfach gelöscht oder überschrieben, sondern in die Alternativbefehlsspeichereinrichtung geschrieben werden.

Außer den Befehlen, die in einem mehr oder weniger weit vorverarbeiteten Stadium in die Alternativbefehlsspeichereinrichtung geschrieben werden, wird zusätzlich die Adresse des ersten dieser Befehle gespeichert.

Gleichzeitig oder danach liest die Prefetch-Einheit aus dem Programmspeicher die Befehle aus, die nach der Ausführung des laut Vorhersage erfolgenden Sprunges auszuführen sind, extrahiert aus den dabei erhaltenen Daten die darin enthaltenen Befehle, schreibt diese in die Befehlsregister und transferiert sie von dort in die Befehlsspeichereinrichtung IFIFO, von wo aus sie die weiteren Stufen der Befehlsabarbeitungs-Pipeline durchlaufen können.

Das Speichern der genannten Befehle in der Alternativbefehlsspeichereinrichtung MC erweist sich als vorteilhaft, wenn sich (in der Speicherzugriffs-Einheit oder in der Befehlsausführungs-Einheit) herausstellt, daß ein Befehl, für welchen vorhergesagt wurde, daß dessen Ausführung einen Sprung zur Folge hat, tatsächlich keinen Sprung zur Folge hat. In diesem Fall sind die in den vorangehenden Pipeline-Stufen und in der Befehlsspeichereinrichtung IFIFO gespeicherten Befehle nicht die Befehle, die nach dem Befehl, für den die falsche Vorhersage getroffen wurde, auszuführen sind. Daher wird die Ausführung dieser Befehle unterbunden und die Prefetch-Einheit veranlaßt, die tatsächlich auszuführenden Befehle in der Befehlsspeichereinrichtung IFIFO bereitzustellen. Bei herkömmlichen programmgesteuerten Einheiten geschieht dies dadurch, daß die Prefetch-Einheit die betreffenden Befehle aus dem Programmspeicher ausliest, wie beschrieben verarbeitet, und schließlich in die Befehlsspeichereinrichtung IFIFO einschreibt. Im Gegensatz hierzu wird bei der vorliegend betrachteten programmgesteuerten Einheit durch die Prefetch-Einheit zunächst überprüft, ob die zu besorgenden Befehle in der Alternativbefehlsspeichereinrichtung MC gespeichert sind. Dies geschieht dadurch, daß die Adresse des ersten Befehls, den die Prefetch-Einheit zu besorgen hat, mit der Adresse verglichen wird, welche zusammen mit den in der Alternativbefehlsspeichereinrichtung MC gespeicherten Befehlen gespeichert wurde. Wenn hierbei eine Übereinstimmung festgestellt wird, muß die Prefetch-Einheit die benötigten Befehle nicht aus dem Programmspeicher auslesen und wie beschrieben weiterverarbeiten, sondern kann gleich die in der Alternativbefehlsspeichereinrichtung MC gespeicherten Befehle verwenden. Die in der Alternativbefehlsspeichereinrichtung MC gespeicherten Befehle werden hierzu aus der Alternativbefehlsspeichereinrichtung MC in den Teil der Prefetch-Einheit, durch welchen Befehle aus dem Programmspeicher ausgelesen und weiterverarbeitet werden, eingeschleust. Im betrachteten Beispiel werden sie in die Befehlsregister BR1 bis BR3 zurückgeschrieben und dann wie Befehle, die aus dem Programmspeicher ausgelesen wurden, weiterverarbeitet.

Es dürfte einleuchten und bedarf keiner näheren Erläuterung, daß Befehle, die aus der Alternativbefehlsspeichereinrichtung MC geholt werden, erheblich schneller zur Weiterverarbeitung durch die nachfolgenden Pipeline-Stufen bereitgestellt werden können, als Befehle, die aus dem Programmspeicher geholt und wie beschrieben verarbeitet werden.

Nur wenn die von der Prefetch-Einheit zu beschaffenden Befehle nicht in der Alternativbefehlsspeichereinrichtung MC enthalten sind, müssen die betreffenden Befehle aus dem Programmspeicher geholt werden.

Die Alternativbefehlsspeichereinrichtung erweist sich auch bei Call-Return-Sequenzen von Vorteil. Wenn die programmgesteuerte Einheit nämlich nicht über einen Return-Stack verfügt, oder wenn die dem Return-Befehl zugeordnete Rücksprungadresse nicht im Return-Stack enthalten ist (beispielsweise weil dieser nicht groß genug ist, um alle Rücksprungadressen speichern zu können), kann die Alternativbefehlsspeichereinrichtung auch dazu verwendet werden, die Befehle, die nach der Ausführung eines Return-Befehls auszuführen sind, schnell zur Verfügung zu stellen. In diesem Fall ergeht von der Befehlsausführungs-Einheit an die Prefetch-Einheit die Anforderung, die nach der Ausführung des Return-Befehls auszuführenden Befehle zu besorgen. Die Prefetch-Einheit kann auch in diesem Fall zunächst überprüfen, ob die von ihr zu besorgenden Befehle in der Alternativbefehlsspeichereinrichtung MC gespeichert sind und dann so weiterverfahren wie es vorstehend für den Fall einer falschen Vorhersage darüber, ob ein Befehl, dessen Ausführung einen Sprung zur Folge hat oder haben kann, beschrieben wurde.

Durch die Alternativbefehlsspeichereinrichtung MC lassen sich die Pausen, die nach der Ausführung eines Befehls, der einen Sprung zur Folge hat oder haben kann, auftreten können, erheblich verkürzen.

Die betrachtete programmgesteuerte Einheit zeichnet sich ferner dadurch aus, daß die Prefetch-Einheit zu Zeiten, zu welchen sie nicht anderweitig aktiv sein muß, aus dem Programmspeicher Befehle ausliest, die auszuführen sind, wenn ein Befehl, der einen Sprung zur Folge hat oder haben kann, anders als vorhergesagt ausgeführt wird.

Der Fall, daß die Prefetch-Einheit inaktiv sein kann, d.h. keine Befehle aus dem Programmspeicher holen und wie beschrieben verarbeiten muß, liegt insbesondere dann vor, wenn vorübergehend kein Bedarf besteht, weitere Befehle in die Befehlsspeichereinrichtung IFIFO einzuschreiben. Dies ist beispielsweise der Fall, wenn wiederholt auszuführende Schleifen vollständig in der Befehlsspeichereinrichtung IFIFO gespeichert sind und die zur Schleife gehörenden Befehle wiederholt ohne ein erneutes Einschreiben dieser Befehle in die Befehlsspeichereinrichtung aus dieser ausgelesen werden können. Die Befehlsspeichereinrichtung IFIFO der vorliegend betrachteten programmgesteuerten Einheit kann hierzu in eine Betriebsart versetzt werden, in welcher sie nicht mehr wie ein FIFO-Speicher, sondern wie ein Speicher mit wahlfreiem Zugriff arbeitet. Das wiederholte Auslesen von in der Befehlsspeichereinrichtung IFIFO gespeicherten Befehlen ermöglicht eine besonders effiziente Art und Weise der Abarbeitung von wiederholt auszuführenden Schleifen und funktioniert wie folgt: Bevor feststeht, daß auszuführende Befehle eine wiederholt auszuführende Schleife repräsentieren, arbeitet die programmgesteuerte Einheit "normal" wie vorstehend beschrieben. D.h., die Prefetch-Einheit holt fortlaufend Befehle aus dem Programmspeicher, verarbeitet diese wie beschrieben, und schreibt sie schließlich in die Befehlsspeichereinrichtung IFIFO, aus welcher sie dann sequentiell ausgelesen und ausgeführt werden. Im Gegensatz zu herkömmlichen programmgesteuerten Einheiten überprüft die Prefetch-Einheit der vorliegend betrachteten programmgesteuerten Einheit zusätzlich, ob die geholten Befehle die Befehle einer wiederholt auszuführenden Schleife sein könnten. Die Prefetch-Einheit geht davon aus, daß dies der Fall sein könnte, wenn sie einen Befehl findet, der einen Sprung zur Folge hat oder haben kann, und wenn das Sprungziel des überprüften Befehls eine Befehlsadresse ist, die nicht allzuweit vor der Adresse des überprüften Befehls liegt. Wenn tatsächlich gerade wiederholt eine Schleife ausgeführt wird, müßte der aktuelle Befehl der Rücksprung-Befehl auf den Schleifenanfang sein, und der nach dem aktuellen Befehl auszuführende Befehl der erste Befehl der Schleife sein. Wenn einige Befehle später, genauer gesagt beim erneuten Erreichen des Schleifenendes durch den Befehl, der im Fall der wiederholten Ausführung einer Schleife der Rücksprung-Befehl sein müßte, ein Sprung zu dem Befehl, der im Fall der wiederholten Ausführung einer Schleife der erste Befehl der Schleife sein müßte, erfolgt, und wenn letzterer noch in der Befehlsspeichereinrichtung IFIFO gespeichert ist, kann davon ausgegangen werden, daß tatsächlich gerade wiederholt eine Schleife ausgeführt wird, und daß die Schleife so kurz ist, daß sie komplett in der Befehlsspeichereinrichtung IFIFO speicherbar ist. In diesem Fall wird bei der betrachteten programmgesteuerten Einheit die Befehlsspeichereinrichtung IFIFO bis zum Verlassen der Schleife so betrieben, daß aus ihr wiederholt die bereits in ihr gespeicherten Befehle der Schleife ausgegeben werden. Dadurch entfällt für die Prefetch-Einheit die Notwendigkeit, die zur Schleife gehörenden Befehle ständig neu aus dem Programmspeicher auslesen und wie beschrieben verarbeiten zu müssen; die Prefetch-Einheit kann bis zum Verlassen der aus der Befehlsspeichereinrichtung IFIFO heraus ausgeführten Schleife inaktiv sein. Die Prefetch-Einheit muß sogar zumindest teilweise deaktiviert werden, weil bei einem ungebremsten weiteren Einschreiben von Befehlen in die Befehlsspeichereinrichtung IFIFO die Gefahr besteht, daß die wiederholt aus der Befehlsspeichereinrichtung IFIFO auszugebenden, d. h. die zur Schleife gehörenden Befehle überschrieben werden, wodurch die beschriebene Art und Weise der Schleifenausführung gestört oder unterbunden werden würde. Im betrachteten Beispiel werden Zeiten, zu denen wiederholt auszuführende kurze Schleifen wie beschrieben aus der Befehlsspeichereinrichtung IFIFO heraus ausgeführt werden, dazu genutzt, die Befehle aus dem Programmspeicher auszulesen, die nach dem Verlassen der Schleife auszuführen sind. Die Prefetch-Einheit liest zu Zeiten, zu denen sie keine andere Aufgabe zu erfüllen hat, die Befehle, die nach dem Verlassen der Schleife auszuführen sind, aus dem Programmspeicher aus und behandelt diese bis zum Einschreiben derselben in die Befehlsregister BR1 bis BR3 wie "normale" Befehle. Die in den Befehlsregister gespeicherten Befehle werden dann jedoch anders als Befehle, die sofort auszuführen sind, nicht oder nur teilweise (so daß keine zur Schleife gehörenden Befehle überschrieben werden) in die Befehlsspeichereinrichtung IFIFO geschrieben. Wenn die gleichzeitig aus der Befehlsspeichereinrichtung IFIFO heraus ausgeführte Schleife verlassen werden soll, hat der am Schleifenende stehende Befehl, dessen Ausführung während der wiederholten Ausführung der Schleife einen Rücksprung zum Schleifenanfang zur Folge hatte, keinen Rücksprung mehr zur Folge. Die Speicherzugriffs-Einheit oder die Befehlsausführungseinheit erkennt dies und fordert nun, wie es bei einer verkehrten Sprungvorhersage üblich ist, die Bereitstellung von Befehlen an, die nach dem nicht ausgeführten Sprung abzuarbeiten sind. Diese Befehle stehen schon in den Befehlsregistern BR1 bis BR3 der Prefetch-Einheit oder eventuell sogar schon in der Befehlsspeichereinrichtung IFIFO zur Verfügung, und können dadurch sofort oder nach einer minimalen Pause aus der Befehlsspeichereinrichtung IFIFO abgeholt und weiterverarbeitet werden. Dadurch kann das Verlassen einer wiederholt ausgeführten Schleife ohne oder jedenfalls ohne nennenswerte Unterbrechung erfolgen.

Um mit Sicherheit ausschließen zu können, daß die in den Befehlsregistern BR1 bis BR3 und/oder der Befehlsspeichereinrichtung IFIFO zur Abarbeitung bereitgestellten Befehle nicht die Befehle sind, die nach dem Aussprung aus der Schleife tatsächlich auszuführen sind (beispielsweise weil die Schleife anders als erwartet verlassen wird), kann vorgesehen werden, die Adresse des Befehls, der nach dem Verlassen der Schleife tatsächlich auszuführen ist, mit der Adresse des ersten der in den Befehlsregistern BR1 bis BR3 und/oder der Befehlsspeichereinrichtung IFIFO zur Abarbeitung bereitstehenden Befehlen zu vergleichen. Wenn bei diesem Vergleich festgestellt wird, daß keine Übereinstimmung vorliegt, werden die tatsächlich auszuführenden Befehle aus dem Programmspeicher geholt und ausgeführt.

Die vorstehend beschriebenen Maßnahmen ermöglichen es also, daß sich die Pausen, die nach der Ausführung eines Befehls, der einen Sprung zur Folge hat oder haben kann, auftreten können, entweder ganz vermeiden oder aber zumindest deutlich verkürzen lassen.

### Bezugszeichenliste

- ABE: Adreßberechnungs-Einheit der Befehlsabarbeitungs-Pipeline
- BAE: Befehlsausführungs-Einheit der Befehlsabarbeitungs-Pipeline
- BRx: Befehlsregister
- ERST: Teil von RS
- FRST: Teil von RS
- IEIFO: Befehlsspeichereinrichtung
- IP: Befehlsadreßregister
- IPₐₗₜ: alternatives Befehlsadreßregister
- MC: Alternativbefehlsspeichereinrichtung (Mispredicted Cache)
- PFE: Prefetch-Einheit der Befehlsabarbeitungs-Pipeline
- PRST: Teil von RS
- PS: Programmspeicher
- READF: Lese-Kennung
- RETADR: Rücksprungadresse
- RS: Return Stack
- SZE: Speicherzugriffs-Einheit der Befehlsabarbeitungs-Pipeline
- VALF: Gültigkeitskennung

## Patentansprüche

1. Programmgesteuerte Einheit
- mit einer Prefetch-Einheit (PFE), welche
- aus einem Programmspeicher (PS) Befehle repräsentierende Daten ausliest, die darin enthaltenen Befehle extrahiert, und zur Abholung durch eine die Befehle weiterverarbeitende Einheit (ABE) bereitstellt, und
- die Befehle nach Befehlen durchsucht, deren Ausführung einen Sprung zu Folge hat oder haben kann, für die dabei gefundenen Befehle vorhersagt, ob deren Ausführung einen Sprung zur Folge haben wird oder nicht, und abhängig vom Vorhersage-Ergebnis so weiterarbeitet, daß nach einem Befehl, dessen Ausführung einen Sprung zur Folge hat oder haben kann, derjenige Befehl zur Abholung durch die die Befehle weiterverarbeitende Einheit bereitgestellt wird, der laut Vorhersage danach auszuführen ist, und
- mit einem System-Stack, in welchen die Adressen der Befehle geschrieben werden, die nach Befehlen auszuführen sind, die die Fortsetzung einer durch die Ausführung anderer Befehle vorübergehend unterbrochenen Abarbeitung einer Befehlsfolge veranlassen,
**dadurch gekennzeichnet,**
**daß** zusätzlich zum System-Stack eine Rücksprungadressen-Speichereinrichtung (RS) vorgesehen ist, in welche die Adressen der Befehle gespeichert werden, die nach Befehlen auszuführen sind, die die Fortsetzung einer durch die Ausführung anderer Befehle vorübergehend unterbrochenen Abarbeitung einer Befehlsfolge veranlassen, und
**daß** die Prefetch-Einheit (PFE) die in der Rücksprungadressen Speichereinrichtung (RS) gespeicherten Adressen aus der Rüksprungadressen-Speichereinrichtung (RS) ausliest.

2. Programmgesteuerte Einheit nach Anspruch 1,
**dadurch gekennzeichnet,**
**daß** die Prefetch-Einheit (PFE) die im Programmspeicher (PS) gespeicherten Daten in Einheiten ausliest, die mehrere Befehle umfassen können, und in der Lage ist, pro Taktperiode mehrere Befehle den an ihnen vorzunehmenden Aktionen zu unterziehen.

3. Programmgesteuerte Einheit nach Anspruch 1 oder 2,
**dadurch gekennzeichnet,**
**daß** das Bereitstellen der Befehle zur Abholung durch die die Befehle weiterverarbeitende Einheit (ABE) durch ein Einschreiben der Befehle in eine Befehlsspeichereinrichtung (IFIFO) erfolgt.

4. Programmgesteuerte Einheit nach Anspruch 3,
**dadurch gekennzeichnet,**
**daß** die in der Befehlsspeichereinrichtung (IFIFO) gespeicherten Befehle durch die die Befehle weiterverarbeitende Einheit (ABE) sequentiell auslesbar sind.

5. Programmgesteuerte Einheit nach Anspruch 3 oder 4,
**dadurch gekennzeichnet,**
**daß** die in die Befehlsspeichereinrichtung (IFIFO) einzuschreibenden Befehle aus zum Zwischenspeichern der Befehle dienenden Befehlsregistern (BR1-BR3) der Prefetch-Einheit (PFE) in die Befehlsspeichereinrichtung transferiert werden.

6. Programmgesteuerte Einheit nach einem der vorhergehenden Ansprüche,
**dadurch gekennzeichnet,**
**daß** die die Befehle weiterverarbeitende Einheit (ABE) eine Pipeline-Stufe einer Befehlsabarbeitungs-Pipeline der programmgesteuerten Einheit ist.

7. Programmgesteuerte Einheit nach einem der vorhergehenden Ansprüche,
**dadurch gekennzeichnet,**
**daß** in der Rücksprungadressen-Speichereinrichtung (RS) ausschließlich die Adressen der Befehle, die nach Befehlen auszuführen sind, die die Fortsetzung einer durch die Ausführung anderer Befehle vorübergehend unterbrochenen Abarbeitung einer Befehlsfolge veranlassen, und gegebenenfalls die die Rücksprungadressen-Speichereinrichtungs-Einträge betreffende Informationen gespeichert werden.

8. Programmgesteuerte Einheit nach Anspruch 7,
**dadurch gekennzeichnet,**
**daß** die die Rücksprungadressen-Speichereinrichtungs-Einträge betreffenden Informationen eine Lese-Kennung (READF) umfassen, die angibt, ob der betreffende Rücksprungadressen-Speichereinrichtungs-Eintrag bereits verwendet wurde.

9. Programmgesteuerte Einheit nach Anspruch 7 oder 8,
**dadurch gekennzeichnet,**
**daß** die die Rücksprungadressen-Speichereinrichtungs-Einträge betreffende Informationen eine Gültigkeits-Kennung (VALF) umfassen, die angibt ob der betreffende Rücksprungadressen-Speichereinrichtungs-Eintrag gültig ist.

10. Programmgesteuerte Einheit nach einem der vorhergehenden Ansprüche,
**dadurch gekennzeichnet,**
**daß** die Rücksprungadressen-Speichereinrichtung (RS) von der Prefetch-Einheit (PFE) beschrieben werden kann.

11. Programmgesteuerte Einheit nach einem der vorhergehenden Ansprüche,
**dadurch gekennzeichnet,**
**daß** die Befehle, die die Fortsetzung einer durch die Ausführung anderer Befehle vorübergehend unterbrochenen Abarbeitung einer Befehlsfolge veranlassen, Return-Befehle sind.

12. Programmgesteuerte Einheit nach einem der vorhergehenden Ansprüche,
**dadurch gekennzeichnet,**
**daß** die vorübergehende Unterbrechung der Abarbeitung einer Befehlsfolge durch einen Call-Befehl veranlaßt wird.

13. Programmgesteuerte Einheit nach einem der vorhergehenden Ansprüche,
**dadurch gekennzeichnet,**
**daß** die vorübergehende Unterbrechung der Abarbeitung einer Befehlsfolge durch einen Interrupt Request veranlaßt wird.

14. Programmgesteuerte Einheit nach einem der vorhergehenden Ansprüche,
**dadurch gekennzeichnet,**
**daß** die Rücksprungadressen-Speichereinrichtung (RS) in mehrere Teile aufgeteilt ist, die im Ansprechen auf unterschiedliche Ereignisse Adressen beschrieben und ausgelesen werden.

15. Programmgesteuerte Einheit nach Anspruch 14,
**dadurch gekennzeichnet,**
**daß** in einen ersten der Rücksprungadressen-Speichereinrichtungs-Teile (FRST) ein Eintrag erfolgt, wenn ein Befehl, der die vorübergehende Unterbrechung der Abarbeitung einer Befehlsfolge veranlaßt, in die Befehlsspeichereinrichtung (IFIFO) geschrieben wird.

16. Programmgesteuerte Einheit nach Anspruch 14 oder 15,
**dadurch gekennzeichnet,**
**daß** in einen zweiten der Rücksprungadressen-Speichereinrichtungs-Teile (PRST) ein Eintrag erfolgt, wenn der Befehl, der die vorübergehende Unterbrechung der Abarbeitung einer Befehlsfolge veranlaßt, in einer der der Prefetch-Einheit (PFE) folgenden Befehlsabarbeitungs-Pipeline-Stufen auf seine Ausführung vorbereitet wird.

17. Programmgesteuerte Einheit nach Anspruch 16,
**dadurch gekennzeichnet,**
**daß** der Eintrag in den zweiten Rücksprungadressen-Speichereinrichtungs-Teil (PRST) durch eine Befehlsabarbeitungs-Pipeline-Stufe (ABE) erfolgt, durch welche Adressen ermittelt werden, die zur Ausführung des momentan darin befindlichen Befehls oder später auszuführender Befehle benötigt werden.

18. Programmgesteuerte Einheit nach Anspruch 17,
**dadurch gekennzeichnet,**
**daß** die den zweiten Rücksprungadressen-Speichereinrichtungs-Teil (PRST) beschreibende Befehlsabarbeitungs-Pipeline-Stufe (ABE) die Adresse des jeweils darin befindlichen Befehls ermittelt und in ein Befehlsadreßregister (IP) schreibt.

19. Programmgesteuerte Einheit nach Anspruch 17 oder 18,
**dadurch gekennzeichnet,**
**daß** die den zweiten Rücksprungadressen-Speichereinrichtungs-Teil (PRST) beschreibende Befehlsabarbeitungs-Pipeline-Stufe (ABE) im Fall, daß der vorhergehende Befehl ein Befehl ist, der einen Sprung zur Folge hat oder haben kann, die Adresse des Befehls ermittelt, der auszuführen wäre, wenn der vorhergehende Befehl nicht wie vorhergesagt ausgeführt werden würde, ermittelt und in ein alternatives Befehlsadreßregister (IPₐₗₜ) schreibt.

20. Programmgesteuerte Einheit nach Anspruch 19,
**dadurch gekennzeichnet,**
**daß** das alternatives Befehlsadreßregister (IPₐₗₜ) der zur Befehlsadressenspeicherung vorgesehene Teil des zweiten Rücksprungadressen-Speichereinrichtungs-Teils (PRST) ist.

21. Programmgesteuerte Einheit nach einem der Ansprüche 14 bis 20,
**dadurch gekennzeichnet,**
**daß** in einen dritten der Rücksprungadressen-Speichereinrichtungs-Teile (ERST) ein Eintrag erfolgt, wenn feststeht, daß der Befehl, der die vorübergehende Unterbrechung der Abarbeitung einer Befehlsfolge veranlaßt, wie vorhergesagt ausgeführt wird.

22. Programmgesteuerte Einheit nach Anspruch 21,
**dadurch gekennzeichnet,**
**daß** der Eintrag in den dritten Rücksprungadressen-Speichereinrichtungs-Teil (ERST) durch einen Transfer eines Eintrages aus einem der anderen Rücksprungadressen-Speichereinrichtungs-Teile (FRST, PRST) in den dritten Rücksprungadressen-Speichereinrichtungs-Teil (ERST) erfolgt.

23. Programmgesteuerte Einheit nach Anspruch 21 oder 22,
**dadurch gekennzeichnet,**
**daß** der Transfer der im zweiten Rücksprungadressen-Speichereinrichtungs-Teil (PRST) gespeicherten Befehlsadresse in den dritten Rücksprungadressen-Speichereinrichtungs-Teil (ERST) erfolgt, wenn sich der Befehl, der nach dem Befehl, der die vorübergehende Unterbrechung der Abarbeitung einer Befehlsfolge veranlaßt, auszuführen ist, in der den zweiten Rücksprungadressen-Speichereinrichtungs-Teil (PRST) beschreibenden Befehlsabarbeitungs-Pipeline-Stufe befindet.

24. Programmgesteuerte Einheit nach einem der vorhergehenden Ansprüche,
**dadurch gekennzeichnet,**
**daß** die Rücksprungadressen-Speichereinrichtungs-Einträge beim Eintrag in die Rücksprungadressen-Speichereinrichtung (RS) als gültig und ungelesen markiert werden.

25. Programmgesteuerte Einheit nach einem der vorhergehenden Ansprüche,
**dadurch gekennzeichnet,**
**daß** die Rücksprungadressen-Speichereinrichtungs-Einträge im ersten und im zweiten Rücksprungadressen-Speichereinrichtungs-Teil (FRST, PRST) als ungültig markiert werden, wenn der Eintrag im zweiten Rücksprungadressen-Speichereinrichtungs-Teil (PRST) in den dritten Rücksprungadressen-Speichereinrichtungs-Teil (ERST) transferiert wird.

26. Programmgesteuerte Einheit nach einem der vorhergehenden Ansprüche,
**dadurch gekennzeichnet,**
**daß** die Rücksprungadressen-Speichereinrichtungs-Einträge im ersten und im zweiten Rücksprungadressen-Speichereinrichtungs-Teil (FRST, PRST) als ungültig markiert werden, wenn sich herausstellt, daß der Befehl, von dem angenommen wurde, daß er die vorübergehende Unterbrechung der Abarbeitung einer Befehlsfolge veranlaßt, nicht oder nicht wie vorhergesagt ausgeführt wird.

27. Programmgesteuerte Einheit nach einem der vorhergehenden Ansprüche,
**dadurch gekennzeichnet,**
**daß** beim Auftreten eines Befehls, der die Fortsetzung einer durch die Ausführung anderer Befehle vorübergehend unterbrochenen Abarbeitung einer Befehlsfolge veranlaßt, die Adresse des nach diesem Befehl auszuführenden Befehls aus der Rücksprungadressen-Speichereinrichtung (RS) ausgelesen wird.

28. Programmgesteuerte Einheit nach Anspruch 27,
**dadurch gekennzeichnet,**
**daß** die Prefetch-Einheit beim Auftreten eines Befehls, der die Fortsetzung einer durch die Ausführung anderer Befehle vorübergehend unterbrochenen Abarbeitung einer Befehlsfolge veranlaßt, zunächst im ersten Rücksprungadressen-Speichereinrichtungs-Teil (FRST) nachsieht, ob dort ein gültiger und ungelesener Eintrag vorhanden ist, und, wenn dies der Fall ist, diesen als die zugeordnete Rücksprungadresse verwendet.

29. Programmgesteuerte Einheit nach Anspruch 28,
**dadurch gekennzeichnet,**
**daß** die Prefetch-Einheit dann, wenn im ersten Rücksprungadressen-Speichereinrichtungs-Teil (FRST) kein gültiger und ungelesener Eintrag vorhanden ist, im zweiten Rücksprungadressen-Speichereinrichtungs-Teil (PRST) nachsieht, ob dort ein gültiger und ungelesener Eintrag vorhanden ist, und, wenn dies der Fall ist, diesen als die zugeordnete Rücksprungadresse verwendet.

30. Programmgesteuerte Einheit nach Anspruch 29,
**dadurch gekennzeichnet,**
**daß** die Prefetch-Einheit dann, wenn auch im zweiten Rücksprungadressen-Speichereinrichtungs-Teil (PRST) kein gültiger und ungelesener Eintrag vorhanden ist, im dritten Rücksprungadressen-Speichereinrichtungs-Teil (ERST) nachsieht, ob dort ein gültiger und ungelesener Eintrag vorhanden ist, und, wenn dies der Fall ist, diesen als die zugeordnete Rücksprungadresse verwendet.

31. Programmgesteuerte Einheit nach einem der vorhergehenden Ansprüche,
**dadurch gekennzeichnet,**
**daß** ein Rücksprungadressen-Speichereinrichtungs-Eintrag, der als Rücksprungadresse verwendet wird, als gelesen markiert wird.

32. Programmgesteuerte Einheit nach Anspruch 31,
**dadurch gekennzeichnet,**
**daß** ein bereits als gelesen markierter Rücksprungadressen-Speichereinrichtungs-Eintrag wieder als ungelesen markiert wird, wenn der Befehl, im Ansprechen auf dessen Auftreten Rücksprungadressen-Speichereinrichtungs-Eintrag ausgelesen und als Rücksprungadresse verwendet wurde, nicht oder nicht wie vorhergesagt ausgeführt wird.

33. Programmgesteuerte Einheit nach einem der vorhergehenden Ansprüche,
**dadurch gekennzeichnet,**
**daß** ein Rücksprungadressen-Speichereinrichtungs-Eintrag als ungültig markiert wird, wenn feststeht, daß der Befehl, im Ansprechen auf dessen Auftreten der betreffende Rücksprungadressen-Speichereinrichtungs-Eintrag ausgelesen und als Rücksprungadresse verwendet wurde, wie vorhergesagt ausgeführt wird.

34. Programmgesteuerte Einheit nach einem der vorhergehenden Ansprüche,
**dadurch gekennzeichnet,**
**daß** diese die aus der Rücksprungadressen-Speichereinrichtung (RS) erhaltene Rücksprungadresse mit der im System-Stack gespeicherten Rücksprungadresse vergleicht, sobald letztere wie bei Rücksprungbefehlen üblich aus dem System-Stack ausgelesen wurde.

35. Programmgesteuerte Einheit nach Anspruch 1,
**dadurch gekennzeichnet,**
**daß** eine Alternativbefehlsspeichereinrichtung (MC) vorgesehen ist, in welche im Fall, daß für einen Befehl vorhergesagt wurde, daß dessen Ausführung einen Sprung zur Folge hat, Daten eingeschrieben werden, die Befehle repräsentieren, welche auszuführen wären, wenn kein Sprung ausgeführt werden würde.

36. Programmgesteuerte Einheit nach Anspruch 35,
**dadurch gekennzeichnet,**
**daß** die Prefetch-Einheit (PFE) die im Programmspeicher (PS) gespeicherten Daten in Einheiten ausliest, die mehrere Befehle umfassen können, und in der Lage ist, pro Taktperiode mehrere Befehle den an ihnen vorzunehmenden Aktionen zu unterziehen.

37. Programmgesteuerte Einheit nach Anspruch 35 oder 36,
**dadurch gekennzeichnet,**
**daß** das Bereitstellen der Befehle zur Abholung durch die die Befehle weiterverarbeitende Einheit (ABE) durch ein Einschreiben der Befehle in eine Befehlsspeichereinrichtung (IFIFO) erfolgt.

38. Programmgesteuerte Einheit nach Anspruch 37,
**dadurch gekennzeichnet,**
**daß** die in der Befehlsspeichereinrichtung (IFIFO) gespeicherten Befehle durch die die Befehle weiterverarbeitende Einheit (ABE) sequentiell auslesbar sind.

39. Programmgesteuerte Einheit nach Anspruch 37 oder 38,
**dadurch gekennzeichnet,**
**daß** die in die Befehlsspeichereinrichtung (IFIFO) einzuschreibenden Befehle aus zum Zwischenspeichern der Befehle dienenden Befehlsregistern (BR1-BR3) der Prefetch-Einheit in die Befehlsspeichereinrichtung transferiert werden.

40. Programmgesteuerte Einheit nach einem der Ansprüche 35 bis 39,
**dadurch gekennzeichnet,**
**daß** die Alternativbefehlsspeichereinrichtung (MC) durch einen Cache-Speicher gebildet wird, der so klein ist, daß auf ihn ohne Wartezyklen zugreifbar ist.

41. Programmgesteuerte Einheit nach einem der Ansprüche 35 bis 40,
**dadurch gekennzeichnet,**
**daß** in die Alternativbefehlsspeichereinrichtung (MC) nur Befehle geschrieben werden, die die Prefetch-Einheit zum Zeitpunkt, zu dem vorhergesagt wird, daß die Ausführung eines Befehls einen Sprung zur Folge haben wird, bereits aus dem Programmspeicher (PS) geholt hat.

42. Programmgesteuerte Einheit nach Anspruch nach einem der Ansprüche 35 bis 41,
**dadurch gekennzeichnet,**
**daß** in die Alternativbefehlsspeichereinrichtung (MC) nur Befehle geschrieben werden, die zum Zeitpunkt, zu dem vorhergesagt wird, daß die Ausführung eines Befehls einen Sprung zur Folge haben wird, bereits in den Befehlsregistern (BR1-BR3) gespeichert sind.

43. Programmgesteuerte Einheit nach einem der Ansprüche 35 bis 42,
**dadurch gekennzeichnet,**
**daß** wenigstens für einen der Alternativbefehlsspeichereinrichtungs-Einträge zusätzlich die Befehlsadresse gespeichert wird.

44. Programmgesteuerte Einheit einem der Ansprüche 35 bis 43,
**dadurch gekennzeichnet,**
**daß** die Prefetch-Einheit (PFE) bei einer Anforderung, bestimmte Befehle bereitzustellen, überprüft ob diese Befehle in der Alternativbefehlsspeichereinrichtung (MC) gespeichert sind, und, falls dies der Fall ist, die in der Alternativbefehlsspeichereinrichtung gespeicherten Befehle verwendet.

45. Programmgesteuerte Einheit nach Anspruch 44,
**dadurch gekennzeichnet,**
**daß** die in der Alternativbefehlsspeichereinrichtung (MC) gespeicherten Befehle dort hin transferiert werden, von wo aus sie in die Alternativbefehlsspeichereinrichtung transferiert wurden.

46. Programmgesteuerte Einheit nach Anspruch 44 oder 45,
**dadurch gekennzeichnet,**
**daß** die in der Alternativbefehlsspeichereinrichtung (MC) gespeicherten Befehle in die Befehlsregister (BR1-BR3) transferiert werden.

47. Programmgesteuerte Einheit nach Anspruch 1,
**dadurch gekennzeichnet,**
**daß** die Prefetch-Einheit (PFE) zu Zeiten, zu welchen sie nicht anderweitig aktiv sein muß, aus dem Programmspeicher (PS) Befehle ausliest, die auszuführen sind, wenn ein Befehl, der einen Sprung zur Folge hat oder haben kann, anders als vorhergesagt ausgeführt wird.

48. Programmgesteuerte Einheit nach Anspruch 47,
**dadurch gekennzeichnet,**
**daß** das Bereitstellen der Befehle zur Abholung durch die die Befehle weiterverarbeitende Einheit (ABE) durch ein Einschreiben der Befehle in eine Befehlsspeichereinrichtung (IFIFO) erfolgt.

49. Programmgesteuerte Einheit nach Anspruch 48,
**dadurch gekennzeichnet,**
**daß** die in der Befehlsspeichereinrichtung (IFIFO) gespeicherten Befehle durch die die Befehle weiterverarbeitende Einheit (ABE) sequentiell auslesbar sind.

50. Programmgesteuerte Einheit nach Anspruch 48 oder 49,
**dadurch gekennzeichnet,**
**daß** die in die Befehlsspeichereinrichtung (IFIFO) einzuschreibenden Befehle aus zum Zwischenspeichern der Befehle dienenden Befehlsregistern (BR1-BR3) der Prefetch-Einheit in die Befehlsspeichereinrichtung transferiert werden.

51. Programmgesteuerte Einheit nach einem der Ansprüche 48 bis 50,
**dadurch gekennzeichnet,**
**daß** die Befehlsspeichereinrichtung (IFIFO) normalerweise so betrieben wird, daß sie als FIFO-Speicher verwendbar ist.

52. Programmgesteuerte Einheit nach einem der Ansprüche 48 bis 51,
**dadurch gekennzeichnet,**
**daß** die Befehlsspeichereinrichtung (IFIFO) in eine Betriebsart versetzbar ist, in welcher sie als Speicher mit wahlfreiem Zugriff verwendbar ist.

53. Programmgesteuerte Einheit nach Anspruch 52,
**dadurch gekennzeichnet,**
**daß** die Befehlsspeichereinrichtung (IFIFO) in die Betriebsart versetzt wird, in welcher sie als Speicher mit wahlfreiem Zugriff verwendbar ist, wenn eine wiederholt auszuführende Schleife vollständig in der Befehlsspeichereinrichtung gespeichert ist.

54. Programmgesteuerte Einheit nach Anspruch 53,
**dadurch gekennzeichnet,**
**daß** dann, wenn eine wiederholt auszuführende Schleife vollständig in der Befehlsspeichereinrichtung (IFIFO) gespeichert ist, die zur Schleife gehörenden Befehle ohne ein wiederholtes Einschreiben derselben in die Befehlsspeichereinrichtung wiederholt aus dieser ausgelesen werden.

55. Programmgesteuerte Einheit nach einem der Ansprüche 47 bis 54,
**dadurch gekennzeichnet,**
**daß** die Prefetch-Einheit (PFE) während Zeiten, zu denen keine Notwendigkeit besteht, weitere Befehle zur Abholung durch eine die Befehle weiterverarbeitende Einheit (ABE) bereitzustellen, aus dem Programmspeicher (PS) Befehle ausliest, die auszuführen sind, wenn ein in der Befehlsspeichereinrichtung oder in einer der der Prefetch-Einheit nachgeordneten Befehlsabarbeitungs-Pipeline-Stufen (ABE, SZE, BAE) befindlicher Befehl, der einen Sprung zur Folge hat oder haben kann, anders als vorhergesagt ausgeführt wird.

56. Programmgesteuerte Einheit nach einem der Ansprüche 47 bis 55,
**dadurch gekennzeichnet,**
**daß** die Prefetch-Einheit (PFE) während Zeiten, zu denen eine wiederholt auszuführende Schleife vollständig in der Befehlsspeichereinrichtung (IFIFO) gespeichert ist, und die zur Schleife gehörenden Befehle ohne ein wiederholtes Einschreiben derselben in die Befehlsspeichereinrichtung wiederholt aus dieser ausgelesen werden, aus dem Programmspeicher (PS) Befehle ausliest, die nach dem Verlassen der Schleife auszuführen sind.

57. Programmgesteuerte Einheit nach Anspruch 56,
**dadurch gekennzeichnet,**
**daß** die aus dem Programmspeicher (PS) ausgelesenen Befehle, die nach dem Verlassen der Schleife auszuführen sind, während der Ausführung der Schleife nur in die Befehlsspeichereinrichtung (IFIFO) geschrieben werden, wenn in dieser **dadurch** keine zur Schleife gehörenden Befehle überschrieben werden.

58. Programmgesteuerte Einheit nach Anspruch 56 oder 57,
**dadurch gekennzeichnet,**
**daß** die aus dem Programmspeicher (PS) ausgelesenen Befehle, die nach dem Verlassen der Schleife auszuführen sind, während der Ausführung der Schleife noch nicht in die Befehlsspeichereinrichtung (IFIFO) geschrieben werden.

59. Programmgesteuerte Einheit nach einem der Ansprüche 56 bis 58,
**dadurch gekennzeichnet,**
**daß** diese die Adresse des Befehls, der nach dem Verlassen der Schleife tatsächlich auszuführen ist, mit der Adresse des ersten der in den Befehlsregistern (BR1-BR3) und/oder der Befehlsspeichereinrichtung (IFIFO) zur Abarbeitung bereitstehenden Befehlen vergleicht.

## Claims

1. Program-controlled unit
- comprising a prefetch unit (PFE), which
- reads data representing instructions out of a program memory (PS), extracts the instructions contained therein and provides them for fetching by a unit (ABE) processing the instructions further, and
- searches the instructions for instructions, the execution of which results or can result in a jump, predicts for the instructions found during this process whether their execution will result in a jump or not, and, depending on the result of the prediction, continues to operate in such a manner that following an instruction, the execution of which results or can result in a jump, the instruction which, according to the prediction, must be executed thereafter, is provided for fetching by the unit processing the instructions further, and
- comprising a system stack into which the addresses of the instructions are written which must be executed after instructions which initiate the continuation of a processing of an instruction sequence temporarily interrupted by the execution of other instructions, **characterized in that** in addition to the system stack a return address storage device (RS) is provided in which the addresses of the instructions are stored which must be executed after instructions which initiate the continuation of a processing of an instruction sequence temporarily interrupted by the execution of other instructions, and **in that** the prefetch unit (PFE) reads the addresses stored in the return address storage device (RS) from the return address storage device (RS).

2. Program-controlled unit according to Claim 1, **characterized in that** the prefetch unit (PFE) reads out the data stored in the program memory (PS) in the units which can comprise a number of instructions and is capable of subjecting a number of instructions per clock period to the actions to be performed on them.

3. Program-controlled unit according to Claim 1 or 2, **characterized in that** the instructions for fetching are provided by the unit (ABE) processing the instructions further by writing the instructions into an instruction storage device (IFIFO).

4. Program-controlled unit according to Claim 3, **characterized in that** the instructions stored in the instruction storage device (IFIFO) can be read out sequentially by the unit (ABE) processing the instructions further.

5. Program-controlled unit according to Claim 3 or 4, **characterized in that** the instructions to be written into the instruction storage device (IFIFO) are transferred into the instruction storage device from instruction registers (BR1-BR3), used for temporarily storing the instructions, of the prefetch unit (PFE).

6. Program-controlled unit according to one of the preceding claims, **characterized in that** the unit (ABE) processing the instructions further is a pipeline stage of an instruction processing pipeline of the program-controlled unit.

7. Program-controlled unit according to one of the preceding claims, **characterized in that** in the return address storage device (RS), only the addresses of the instructions which are to be executed following instructions which initiate the continuation of a processing of an instruction sequence temporarily interrupted by the execution of other instructions, and possibly the information relating to the entries in the return address storage device, are stored.

8. Program-controlled unit according to Claim 7, **characterized in that** the information relating to the return address storage device entries comprises a read flag (READF) which specifies whether the relevant return address storage device entry has already been used.

9. Program-controlled unit according to Claim 7 or 8, **characterized in that** the information relating to the return address storage device entries comprises a validity flag (VALF) which specifies whether the relevant return address storage device entry is valid.

10. Program-controlled unit according to one of the preceding claims, **characterized in that** the return address storage device (RS) can be written into by the prefetch unit (PFE).

11. Program-controlled unit according to one of the preceding claims, **characterized in that** the instructions which initiate the continuation of a processing of an instruction sequence temporarily interrupted by the execution of other instructions are return instructions.

12. Program-controlled unit according to one of the preceding claims, **characterized in that** the temporary interruption of the processing of an instruction sequence is caused by a call instruction.

13. Program-controlled unit according to one of the preceding claims, **characterized in that** the temporary interruption of the processing of an instruction sequence is caused by an interrupt request.

14. Program-controlled unit according to one of the preceding claims, **characterized in that** the return address storage device (RS) is divided into a number of parts into which addresses are written and out of which addresses are read in response to different events.

15. Program-controlled unit according to Claim 14, **characterized in that** an entry is made in a first one of the return address storage device parts (FRST) if an instruction which initiates the temporary interruption of the processing of an instruction sequence is written into the instruction storage device (IFIFO).

16. Program-controlled unit according to Claim 14 or 15, **characterized in that** an entry is made in a second one of the return address storage device parts (PRST) if the instruction which initiates temporary interruption of the processing of an instruction sequence is prepared for its execution in one of the instruction processing pipeline stages following the prefetch unit (PFE).

17. Program-controlled unit according to Claim 16, **characterized in that** the entry in the second return address storage device part (PRST) is made by an instruction processing pipeline stage (ABE) by means of which addresses are determined which are needed for executing the instruction currently located therein or the instructions to be executed later.

18. Program-controlled unit according to Claim 17, **characterized in that** the instruction processing pipeline stage (ABE) writing into the second return address storage device part (PRST) determines the address of the instruction in each case located therein and writes it into an instruction address register (IP).

19. Program-controlled unit according to Claim 17 or 18, **characterized in that** the instruction processing pipeline stage (ABE) writing in the second return address storage device part (PRST), in the case where the preceding instruction is an instruction which results or can result in a jump, determines the address of the instruction which would have to be executed if the preceding instruction would not be executed as predicted, and writes it into an alternative instruction address register (IPₐₗₜ).

20. Program-controlled unit according to Claim 19, **characterized in that** the alternative instruction address register (IPₐₗₜ) is the part of the second return address storage device part (PRST) intended for instruction address storage.

21. Program-controlled unit according to one of Claims 14 to 20, **characterized in that** an entry is made in a third one of the return address storage device parts (ERST) if it is established that the instruction which initiates the temporary interruption of the processing of an instruction sequence is executed as predicted.

22. Program-controlled unit according to Claim 21, **characterized in that** the entry in the third return address storage device part (ERST) is made by a transfer of an entry from one of the other return address storage device parts (FRST, PRST) into the third return address storage device part (ERST).

23. Program-controlled unit according to Claim 21 or 22, **characterized in that** the instruction address stored in the second return address storage device part (PRST) is transferred into the third return address storage device part (ERST) if the instruction which must be executed following the instruction which initiates the temporary interruption of the processing of an instruction sequence is located in the instruction processing pipeline stage writing into the second return address storage device part (PRST).

24. Program-controlled unit according to one of the preceding claims, **characterized in that** the return address storage device entries are flagged as valid and unread on being entered into the return address storage device (RS).

25. Program-controlled unit according to one of the preceding claims, **characterized in that** the return address storage device entries in the first and in the second return address storage device part (FRST, PRST) are flagged as invalid when the entry in the second return address storage device part (PRST) is transferred into the third return address storage device part (ERST).

26. Program-controlled unit according to one of the preceding claims, **characterized in that** the return address storage device entries in the first and in the second return address storage device part (FRST, PRST) are flagged as invalid if it is found that the instruction, of which it had been assumed that it initiates the temporary interruption of the processing of an instruction sequence, is not executed or not executed as predicted.

27. Program-controlled unit according to one of the preceding claims, **characterized in that** when an instruction occurs which initiates the continuation of a processing of an instruction sequence temporarily interrupted by the execution of other instructions, the address of the instruction to be executed following this instruction is read out of the return address storage device (RS).

28. Program-controlled unit according to Claim 27, **characterized in that** the prefetch unit, when an instruction occurs which initiates the continuation of a processing of an instruction sequence temporarily interrupted by the execution of other instructions, first looks in the first return address storage device part (FRST) as to whether it contains a valid and unread entry, and, if this is so, uses it as the associated return address.

29. Program-controlled unit according to Claim 28, **characterized in that** the prefetch unit, if no valid and unread entry exists in the first return address storage device part (FRST), looks in the second return address storage device part (PRST) as to whether it contains a valid and unread entry and, if this is so, uses it as the associated return address.

30. Program-controlled unit according to Claim 29, **characterized in that** the prefetch unit, if no valid and unread entry exists in the second return address storage device part (PRST), either, looks in the third return address storage device part (ERST) as to whether it contains a valid and unread entry and, if this is so, uses it as the associated return address.

31. Program-controlled unit according to one of the preceding claims, **characterized in that** a return address storage device entry which is used as return address is flagged as read.

32. Program-controlled unit according to Claim 31, **characterized in that** a return address storage device entry already flagged as read is again flagged as unread if the instruction, in response to the occurrence of which return address storage device entry has been read out and used as return address, is not executed or not executed as predicted.

33. Program-controlled unit according to one of the preceding claims, **characterized in that** a return address storage device entry is flagged as invalid if it is established that the instruction, in response to the occurrence of which the relevant return address storage device entry has been read out and used as return address, is executed as predicted.

34. Program-controlled unit according to one of the preceding claims, **characterized in that** it compares the return address obtained from the return address storage device (RS) with the return address stored in the system stack as soon as the latter has been read out of the system stack as is usual in the case of return instructions.

35. Program-controlled unit according to Claim 1, **characterized in that** an alternative instruction storage device (MC) is provided into which data are written which represent instructions which would have to be executed if no jump were to be executed, in the case where it has been predicted for an instruction that its execution results in a jump.

36. Program-controlled unit according to Claim 35, **characterized in that** the prefetch unit (PFE) reads out the data stored in the program memory (PS) in the units which can comprise a number of instructions and is capable of subjecting a number of instructions per clock period to the actions to be performed on them.

37. Program-controlled unit according to Claim 35 or 36, **characterized in that** the instructions for fetching are provided by the unit (ABE) processing the instructions further by writing the instructions into an instruction storage device (IFIFO).

38. Program-controlled unit according to Claim 37, **characterized in that** the instructions stored in the instruction storage device (IFIFO) can be read out sequentially by the unit (ABE) processing the instructions further.

39. Program-controlled unit according to Claim 37 or 38, **characterized in that** the instructions to be written into the instruction storage device (IFIFO) are transferred into the instruction storage device from instruction registers (BR1-BR3), used for temporarily storing the instructions, of the prefetch unit.

40. Program-controlled unit according to one of Claims 35 to 39, **characterized in that** the alternative instruction storage device (MC) is formed by a cache memory which is so small that it can be accessed without wait cycles.

41. Program-controlled unit according to one of Claims 35 to 40, **characterized in that** only instructions already fetched from the program memory (PS) by the prefetch unit at the time at which it is predicted that the execution of an instruction will result in a jump are written into the alternative instruction storage device (MC).

42. Program-controlled unit according to one of Claims 35 to 41, **characterized in that** only instructions which are already stored in the instruction registers (BR1-BR3) at the time at which it is predicted that the execution of an instruction will result in a jump are written into the alternative instruction storage device (MC).

43. Program-controlled unit according to one of Claims 35 to 42, **characterized in that** the instruction address is additionally stored at least for one of the alternative instruction storage device entries.

44. Program-controlled unit according to one of Claims 35 to 43, **characterized in that** the prefetch unit (PFE), in the case of a request to provide certain instructions, checks whether these instructions are stored in the alternative instruction storage device (MC) and, if this is so, uses the instructions stored in the alternative instruction storage device.

45. Program-controlled unit according to Claim 44, **characterized in that** the instructions stored in the alternative instruction storage device (MC) are transferred to the location from where they had been transferred into the alternative instruction storage device.

46. Program-controlled unit according to Claim 44 or 45, **characterized in that** the instructions stored in the alternative instruction storage device (MC) are transferred into the instruction registers (BR1-BR3).

47. Program-controlled unit according to Claim 1, **characterized in that**, at times, at which it does not need to be active in other respects, the prefetch unit (PFE) reads from the program memory (PS) instructions which must be executed if an instruction which results or can result in a jump is executed differently from the predicted manner.

48. Program-controlled unit according to Claim 47, **characterized in that** the instructions for fetching are provided by the unit (ABE) processing the instructions further by writing the instructions into an instruction storage device (IFIFO).

49. Program-controlled unit according to Claim 48, **characterized in that** the instructions stored in the instruction storage device (IFIFO) can be sequentially read out by the unit (ABE) processing the instructions further.

50. Program-controlled unit according to Claim 48 or 49, **characterized in that** the instructions to be written into the instruction storage device (IFIFO) are transferred into the instruction storage device from instruction registers (BR1-BR3) of the prefetch unit which are used for temporarily storing the instructions.

51. Program-controlled unit according to one of Claims 48 to 50, **characterized in that** the instruction storage device (IFIFO) is normally operated in such a manner that it can be used as FIFO store.

52. Program-controlled unit according to one of Claims 48 to 51, **characterized in that** the instruction storage device (IFIFO) can be placed into an operating mode in which it can be used as random access memory.

53. Program-controlled unit according to Claim 52, **characterized in that** the instruction storage device (IFIFO) is placed into the operating mode in which it can be used as random access memory when a loop to be executed repeatedly is completely stored in the instruction storage device.

54. Program-controlled unit according to Claim 53, **characterized in that**, when a loop to be executed repeatedly is stored completely in the instruction storage device (IFIFO), the instructions belonging to the loop are repeatedly read out of the instruction storage device without being repeatedly written into it.

55. Program-controlled unit according to one of Claims 47 to 54, **characterized in that** the prefetch unit (PFE), during times at which there is no necessity of providing further instructions for fetching by a unit (ABE) processing the instructions further, reads instructions out of the program memory (PS) which must be executed when an instruction located in the instruction storage device or in one of the instruction processing pipeline stages (ABE, SZE, BAE) following the prefetch unit and which results or can result in a jump, is executed differently from the predicted manner.

56. Program-controlled unit according to one of Claims 47 to 55, **characterized in that** the prefetch unit (PFE) during times at which a loop to be executed repeatedly is stored completely in the instruction storage device (IFIFO), and the instructions belonging to the loop are repeatedly read out of the instruction storage device without being repeatedly written into it, reads instructions from the program memory (PS) which must be executed after leaving the loop.

57. Program-controlled unit according to Claim 56, **characterized in that** the instructions read out of the program memory (PS), which must be executed after leaving the loop, are only written into the instruction storage device (IFIFO) during the execution of the loop if, as a result, no instructions belonging to the loop are overwritten in the instruction storage device.

58. Program-controlled unit according to Claim 56 or 57, **characterized in that** the instructions read out of the program memory (PS), which must be executed after leaving the loop, are not yet written into the instruction storage device (IFIFO) during the execution of the loop.

59. Program-controlled unit according to one of Claims 56 to 58, **characterized in that** it compares the address of the instruction which must be actually executed after leaving the loop with the address of the first one of the instructions available for processing in the instruction registers (BR1-BR3) and/or the instruction storage device (IFIFO).

## Revendications

1. Unité commandée par programme,
- qui présente une unité de pré-injection (PFE)
- qui lit dans une mémoire de programme (PS) des données qui représentent des ordres, extrait les ordres qui y sont contenus et les prépare en vue de leur extraction par une unité (ABE) de traitement des ordres et
- qui cherche parmi les ordres des ordres dont l'exécution a ou peut avoir un saut pour conséquence, qui prédit pour les ordres ainsi découverts si leur exécution aura ou non un saut pour conséquence et qui les traite en fonction du résultat de la prédiction en préparant après un ordre dont l'exécution a ou peut avoir un saut pour conséquence l'ordre qui doit être exécuté ensuite selon la prédiction en vue de son extraction par l'unité qui traite les ordres et
- avec une pile système dans laquelle sont écrites les adresses des ordres qui doivent être exécutés après des ordres qui permettent la poursuite du traitement d'une succession d'ordres interrompu temporairement par l'exécution d'autres ordres,
**caractérisée en ce que**
un dispositif (RS) de mémoire d'adresses de rebondissement dans lequel sont conservées les adresses des ordres qui doivent être exécutés après des ordres qui permettent la poursuite du traitement d'une succession d'ordres qui a été temporairement interrompu par l'exécution d'autres ordres est prévu en plus de la pile système et
**en ce que** l'unité (PFE) de pré-injection lit dans le dispositif (RS) de mémoire d'adresses de rebondissement les adresses conservées en mémoire dans le dispositif (RS) de mémoire d'adresses de rebondissement.

2. Unité commandée par programme selon la revendication 1, **caractérisée en ce que** l'unité de pré-injection (PFE) lit les données conservées en mémoire dans la mémoire de programme (PS) en unités qui peuvent comprendre plusieurs ordres et est en mesure lors de chaque période d'horloge de faire subir aux ordres les actions qui doivent être entreprises sur eux.

3. Unité commandée par programme selon les revendications 1 ou 2, **caractérisée en ce que** la préparation des ordres en vue de leur extraction par l'unité (ABE) de traitement des ordres s'effectue par inscription des ordres dans un dispositif (IFIFO) de mémoire d'ordres.

4. Unité commandée par programme selon la revendication 3, **caractérisée en ce que** les ordres conservés en mémoire dans le dispositif (IFIFO) de mémoire d'ordres peuvent être lus successivement par l'unité (ABE) de traitement des ordres.

5. Unité commandée par programme selon les revendications 3 ou 4, **caractérisée en ce que** les ordres à inscrire dans le dispositif (IFIFO) de mémoire d'ordres sont transférés dans le dispositif de mémoire d'ordres depuis des registres d'ordres (BR1-BR3) de l'unité de pré-injection (PFE) qui servent à conserver les ordres temporairement en mémoire.

6. Unité commandée par programme selon l'une des revendications précédentes, **caractérisée en ce que** l'unité (ABE) de traitement des ordres est un étage de pipeline d'un pipeline de traitement des ordres de l'unité commandée par programme.

7. Unité commandée par programme selon l'une des revendications précédentes, **caractérisée en ce que** seules les adresses des ordres qui doivent être exécutés après des ordres qui permettent la poursuite du traitement d'une succession d'ordres qui a été interrompu par l'exécution d'autres ordres et éventuellement les informations qui concernent les entrées dans le dispositif de mémoire d'adresses de rebondissement sont conservées en mémoire dans le dispositif (RS) de mémoire d'adresses de rebondissement.

8. Unité commandée par programme selon la revendication 7, **caractérisée en ce que** les informations qui concernent des entrées dans le dispositif de mémoire d'adresses de rebondissement comprennent un indicateur de lecture (READF) qui indique si l'entrée concernée dans le dispositif de mémoire d'adresses de rebondissement a déjà été utilisée.

9. Unité commandée par programme selon les revendications 7 ou 8, **caractérisée en ce que** les informations qui concernent les entrées dans le dispositif de mémoire d'adresses de rebondissement comprennent un indicateur de validité (VALF) qui indique si l'entrée concernée dans le dispositif de mémoire d'adresses de rebondissement est valide.

10. Unité commandée par programme selon l'une des revendications précédentes, **caractérisée en ce que** l'unité de pré-injection (PFE) peut écrire dans le dispositif (RS) de mémoire d'adresses de rebondissement.

11. Unité commandée par programme selon l'une des revendications précédentes, **caractérisée en ce que** les ordres qui permettent la poursuite du traitement d'une succession d'ordres qui a été interrompu temporairement par l'exécution d'autres ordres sont des ordres de retour.

12. Unité commandée par programme selon l'une des revendications précédentes, **caractérisée en ce que** l'interruption temporaire du traitement d'une succession d'ordres est lancée par un ordre d'appel.

13. Unité commandée par programme selon l'une des revendications précédentes, **caractérisée en ce que** l'interruption temporaire du traitement d'une succession d'ordres est lancée par une requête d'interruption.

14. Unité commandée par programme selon l'une des revendications précédentes, **caractérisée en ce que** le dispositif (RS) de mémoire d'adresses de rebondissement est divisé en plusieurs parties dont l'écriture et la lecture sont réalisées en réaction à différents événements.

15. Unité commandée par programme selon la revendication 14, **caractérisée en ce qu'**une entrée est réalisée dans une première partie (FRST) du dispositif de mémoire d'adresses de rebondissement lorsqu'un ordre qui entraîne une interruption temporaire du traitement d'une succession d'ordres est écrit dans le dispositif (IFIFO) de mémoire d'ordres.

16. Unité commandée par programme selon les revendications 14 ou 15, **caractérisée en ce qu'**une entrée est réalisée dans une deuxième partie (PRST) du dispositif de mémoire d'adresses de rebondissement lorsque l'ordre qui entraîne l'interruption temporaire du traitement d'une succession d'ordres est préparé en vue de son exécution dans un des étages de pipeline de traitement d'ordres qui suit l'unité de pré-injection (PFE).

17. Unité commandée par programme selon la revendication 16, **caractérisée en ce que** l'introduction dans la deuxième partie (PRST) du dispositif de mémoire d'adresses de rebondissement s'effectue par un étage (ABE) de pipeline de traitement d'ordres qui détermine quelles adresses sont nécessaires pour l'exécution de l'ordre qui s'y trouve momentanément ou des ordres qui doivent être exécutés ultérieurement.

18. Unité commandée par programme selon la revendication 17, **caractérisée en ce que** l'étage (ABE) de pipeline de traitement d'ordres qui écrit dans la deuxième partie (PRST) du dispositif de mémoire d'adresses de rebondissement détermine l'adresse de l'ordre particulier qui s'y trouve et l'écrit dans un registre (IP) d'adresses d'ordres.

19. Unité commandée par programme selon les revendications 17 ou 18, **caractérisée en ce qu'**au cas où l'ordre précédent est un ordre qui a ou peut avoir un saut pour conséquence, l'étage (ABE) du pipeline de traitement des ordres qui écrit dans la deuxième partie (PRST) du dispositif de mémoire d'adresses de rebondissement détermine l'adresse de l'ordre qui devrait être exécuté si l'ordre précédent n'a pas été exécuté de la façon prédite et écrit dans un autre registre d'adresses d'ordres (IPₐₗₜ).

20. Unité commandée par programme selon la revendication 19, **caractérisée en ce que** l'autre registre (IPₐₗₜ) d'adresses d'ordres est la partie de la deuxième partie (PRST) du dispositif de mémoire d'adresses de rebondissement prévue pour la conservation en mémoire des adresses d'ordre.

21. Unité commandée par programme selon l'une des revendications 14 à 20, **caractérisée en ce qu'**une entrée est effectuée dans une troisième partie (ERST) du dispositif de mémoire d'adresses de rebondissement lorsqu'il est constaté que l'ordre qui entraîne une interruption temporaire du traitement d'une succession d'ordres est réalisé de la façon prédite.

22. Unité commandée par programme selon la revendication 21, **caractérisée en ce que** l'entrée dans la troisième partie (ERST) du dispositif de mémoire d'adresses de rebondissement s'effectue par transfert d'une entrée de l'une des autres parties (FRST, PRST) du dispositif de mémoire d'adresses de rebondissement dans la troisième partie (ERST) du dispositif de mémoire d'adresses de rebondissement.

23. Unité commandée par programme selon l'une des revendications 21 à 22, **caractérisée en ce que** le transfert de l'adresse d'un ordre conservée en mémoire dans la deuxième partie (PRST) du dispositif de mémoire d'adresses de rebondissement dans la troisième partie (ERST) du dispositif de mémoire d'adresses de rebondissement a lieu lorsque l'ordre qui doit être exécuté après l'ordre qui entraîne l'interruption temporaire du traitement d'une succession d'ordres se trouve dans l'étage de pipeline de traitement des ordres qui écrit dans la deuxième partie (PRST) du dispositif de mémoire d'adresses de rebondissement.

24. Unité commandée par programme selon l'une des revendications précédentes, **caractérisée en ce que** les entrées dans le dispositif de mémoire d'adresses de rebondissement sont marquées comme valides et non lues lorsqu'elles sont introduites dans le dispositif (RS) de mémoire d'adresses de rebondissement.

25. Unité commandée par programme selon l'une des revendications précédentes, **caractérisée en ce que** les entrées dans la première et la deuxième partie (FRST, PRST) du dispositif de mémoire d'adresses de rebondissement sont marquées comme non valides lorsque l'entrée dans la deuxième partie (PRST) du dispositif de mémoire d'adresses de rebondissement est transférée dans la troisième partie (ERST) du dispositif de mémoire d'adresses de rebondissement.

26. Unité commandée par programme selon l'une des revendications précédentes, **caractérisée en ce que** les entrées dans la première et la deuxième partie (FRST, PRST) du dispositif de mémoire d'adresses de rebondissement sont marquées comme non valides lorsqu'il s'avère que l'ordre dont on a supposé qu'il entraîne une interruption temporaire du traitement d'une succession d'ordres n'est pas exécuté ou n'est pas exécuté de la façon prédite.

27. Unité commandée par programme selon l'une des revendications précédentes, **caractérisée en ce que** lorsque apparaît un ordre qui lance la poursuite du traitement d'une succession d'ordres qui a été interrompu par l'exécution d'autres ordres, l'adresse de l'ordre qui doit être exécuté après cet ordre est lue dans le dispositif (RS) de mémoire d'adresses de rebondissement.

28. Unité commandée par programme selon la revendication 27, **caractérisée en ce que** lorsque apparaît un ordre qui lance la poursuite du traitement d'une succession d'ordres qui a été interrompu temporairement par l'exécution d'autres ordres, l'unité de pré-injection vérifie dans la première partie (FRST) du dispositif de mémoire d'adresses de rebondissement s'il s'y trouve une entrée valide et non lue et, lorsque c'est le cas, utilise une cette dernière comme adresse de rebondissement associée.

29. Unité commandée par programme selon la revendication 28, **caractérisée en ce que** lorsque aucune entrée valide et non lue ne se trouve dans la première partie (FRST) du dispositif de mémoire d'adresses de rebondissement, l'unité de pré-injection vérifie dans la deuxième partie (PRST) du dispositif de mémoire d'adresses de rebondissement s'il s'y trouve une entrée valide et non lue et, si c'est le cas, utilise cette dernière comme adresse de rebondissement associée.

30. Unité commandée par programme selon la revendication 29, **caractérisée en ce que** lorsque aucune entrée valide et non lue n'est également présente dans la deuxième partie (PRST) du dispositif de mémoire d'adresses de rebondissement, l'unité de pré-injection vérifie dans la troisième partie (ERST) du dispositif de mémoire d'adresses de rebondissement s'il s'y trouve une entrée valide et non lue et, lorsque c'est le cas, utilise cette dernière comme adresse de rebondissement associée.

31. Unité commandée par programme selon l'une des revendications précédentes, **caractérisée en ce qu'**une entrée dans le dispositif de mémoire d'adresses de rebondissement utilisée comme adresse de rebondissement est marquée comme lue.

32. Unité commandée par programme selon la revendication 31, **caractérisée en ce qu'**une entrée marquée comme lue dans le dispositif de mémoire d'adresses de rebondissement est de nouveau marquée comme non lue lorsque l'ordre en réaction auquel l'entrée dans le dispositif de mémoire d'adresses de rebondissement a été lue et utilisée comme adresse de rebondissement n'est pas exécuté ou n'est pas exécuté de la façon prédite.

33. Unité commandée par programme selon l'une des revendications précédentes, **caractérisée en ce qu'**une entrée dans le dispositif de mémoire d'adresses de rebondissement est marquée comme non valide lorsqu'il est constaté que l'ordre en réaction auquel l'entrée concernée dans le dispositif de mémoire d'adresses de rebondissement a été lu et utilisé comme adresse de rebondissement est exécuté de la manière prédite.

34. Unité commandée par programme selon l'une des revendications précédentes, **caractérisée en ce qu'**elle compare l'adresse de rebondissement obtenue dans le dispositif (RS) de mémoire d'adresse de rebondissement à l'adresse de rebondissement conservée en mémoire dans la pile système dès que cette adresse de rebondissement a été lue de la manière habituelle dans la pile système suite à des ordres de rebondissement.

35. Unité commandée par programme selon la revendication 1, **caractérisée en ce qu'**elle présente un dispositif supplémentaire (MC) de mémoire d'ordres dans lequel, au cas où il a été prédit pour un ordre que son exécution a pour conséquence un saut, des données qui représentent des ordres qui auraient dû être exécutés si aucun saut n'avait été effectué sont écrites.

36. Unité commandée par programme selon la revendication 35, **caractérisée en ce que** l'unité (PFE) de pré-injection lit les données conservées en mémoire dans la mémoire programme (PS) en unités qui peuvent comprendre plusieurs ordres et est en mesure par période d'horloge de soumettre plusieurs ordres aux actions qui doivent être entreprises sur eux.

37. Unité commandée par programme selon les revendications 35 ou 36, **caractérisée en ce que** la préparation des ordres en vue de leur extraction par l'unité (ABE) de traitement des ordres s'effectue par inscription des ordres dans un dispositif (IFIFO) de mémoire d'ordres.

38. Unité commandée par programme selon la revendication 37, **caractérisée en ce que** les ordres conservés en mémoire dans le dispositif (IFIFO) de mémoire d'ordres peuvent être lus successivement par l'unité (ABE) de traitement des ordres.

39. Unité commandée par programme selon les revendications 37 ou 38, **caractérisée en ce que** les ordres à inscrire dans le dispositif (IFIFO) de mémoire d'ordres sont transférés dans le dispositif de mémoire d'ordres depuis des registres d'ordres (BR1-BR3) de l'unité de pré-injection (PFE) qui servent à conserver les ordres temporairement en mémoire.

40. Unité commandée par programme selon l'une des revendications 35 à 39, **caractérisée en ce que** le dispositif supplémentaire (MC) de mémoire d'ordres est formé d'une mémoire cache suffisamment petite pour qu'on puisse y accéder sans cycle d'attente.

41. Unité commandée par programme selon l'une des revendications 35 à 40, **caractérisée en ce que** seuls des ordres que l'unité de pré-injection a extraits de la mémoire programme (PS) à l'instant auquel il a été prédit que l'exécution d'un ordre aura un saut pour conséquence sont écrits dans le dispositif supplémentaire (MC) de mémoire d'ordres.

42. Unité commandée par programme selon l'une des revendications 35 à 41, **caractérisée en ce que** seuls des ordres qui sont déjà conservés en mémoire dans les registres d'ordres (BR1-BR3) au moment où il est prédit que l'exécution d'un ordre aura un saut pour conséquence sont écrits dans le dispositif supplémentaire (MC) de mémoire d'ordres.

43. Unité commandée par programme selon l'une des revendications 35 à 42, **caractérisée en ce que** l'adresse de l'ordre est conservée en supplément en mémoire au moins pour une des entrées dans le dispositif supplémentaire de mémoire d'ordres.

44. Unité commandée par programme selon l'une des revendications 35 à 43, **caractérisée en ce que** lorsqu'elle est invitée à préparer des ordres définis, l'unité de pré-injection (PFE) vérifie si ces ordres ont été conservés en mémoire dans le dispositif supplémentaire (MC) de mémoire d'ordres et, si c'est le cas, utilise les ordres conservés en mémoire dans le dispositif supplémentaire de mémoire d'ordres.

45. Unité commandée par programme selon la revendication 44, **caractérisée en ce que** les ordres conservés en mémoire dans le dispositif supplémentaire (MC) de mémoire d'ordres y sont transférés depuis l'emplacement où ils ont été transférés dans le dispositif supplémentaire de mémoire d'ordres.

46. Unité commandée par programme selon les revendications 44 ou 45, **caractérisée en ce que** les ordres conservés en mémoire dans le dispositif supplémentaire (MC) de mémoire d'ordres sont transférés dans les registres d'ordres (BR1-BR3).

47. Unité commandée par programme selon la revendication 1, **caractérisée en ce qu'**aux instants auxquels l'unité de pré-injection (PFE) ne doit pas être active pour d'autres raisons, l'unité de pré-injection lit dans la mémoire programme (PS) les ordres qui doivent être exécutés, lorsqu'un ordre qui a ou peut avoir pour conséquence un saut est exécuté d'une manière différente de celle prédite.

48. Unité commandée par programme selon la revendication 47, **caractérisée en ce que** la préparation des ordres en vue de leur extraction par l'unité (ABE) de traitement des ordres s'effectue par inscription des ordres dans un dispositif (IFIFO) de mémoire d'ordres.

49. Unité commandée par programme selon la revendication 48, **caractérisée en ce que** les ordres conservés en mémoire dans le dispositif (IFIFO) de mémoire d'ordres sont lus successivement par l'unité (ABE) qui traite les ordres.

50. Unité commandée par programme selon les revendications 48 ou 49, **caractérisée en ce que** les ordres à inscrire dans le dispositif (IFIFO) de mémoire d'ordres sont transférés dans le dispositif de mémoire d'ordres depuis des registres d'ordres (BR1-BR3) de l'unité de pré-injection (PFE) qui servent à conserver les ordres temporairement en mémoire.

51. Unité commandée par programme selon l'une des revendications 48 à 50, **caractérisée en ce que** le dispositif (IFIFO) de mémoire d'ordres est utilisé normalement de manière à pouvoir être utilisé comme mémoire FIFO.

52. Unité commandée par programme selon l'une des revendications 48 à 51, **caractérisée en ce que** le dispositif (IFIFO) de mémoire d'ordres peut être placé dans un mode de fonctionnement dans lequel il peut être utilisé comme mémoire à accès sélectif.

53. Unité commandée par programme selon la revendication 52, **caractérisée en ce que** le dispositif (IFIFO) de mémoire d'ordres est placé dans le mode de fonctionnement dans lequel il peut être utilisé comme mémoire à accès sélectif lorsqu'une boucle qui doit être exécutée de manière répétée est entièrement conservée en mémoire dans le dispositif de mémoire d'ordres.

54. Unité commandée par programme selon la revendication 53, **caractérisée en ce que** lorsqu'une boucle à exécuter de manière répétée est conservée entièrement en mémoire dans le dispositif (IFIFO) de mémoire d'ordres, les ordres qui font partie de la boucle sont lus de manière répétée dans le dispositif de mémoire d'ordres sans y être écrits de manière répétée.

55. Unité commandée par programme selon l'une des revendications 47 à 54, **caractérisée en ce que** pendant les périodes au cours desquelles il n'est pas nécessaire de préparer d'autres ordres en vue de leur extraction par une unité (ABE) de traitement des ordres, l'unité de pré-injection (PFE) lit dans la mémoire programme (PS) les ordres qui doivent être exécutés lorsqu'un ordre qui se trouve dans le dispositif de mémoire d'ordres ou dans un des étages (ABE, SZE, BAE) du pipeline de traitement des ordres raccordé en aval de l'unité de pré-injection et qui a ou peut avoir un saut pour conséquence est exécutée de manière différente de celle prédite.

56. Unité commandée par programme selon l'une des revendications 47 à 55, **caractérisée en ce que** pendant les périodes au cours desquelles une boucle qui doit être exécutée de manière répétée est entièrement conservée en mémoire dans le dispositif (IFIFO) de mémoire d'ordres et au cours de laquelle les ordres qui font partie de cette boucle sont lus de manière répétée dans le dispositif de mémoire d'ordres sans qu'ils y soient inscrits de manière répétée, l'unité de pré-injection (PFE) lit dans la mémoire programme (PS) les ordres qui doivent être exécutés après que la boucle a été quittée.

57. Unité commandée par programme selon la revendication 56, **caractérisée en ce que** les ordres lus dans la mémoire programme (PS) et qui doivent être exécutés après que la boucle a été quittée sont écrits uniquement dans le dispositif (IFIFO) de mémoire d'ordres pendant l'exécution de la boucle si cela n'entraîne pas l'écrasement dans ce dispositif d'ordres qui font partie de la boucle.

58. Unité commandée par programme selon les revendications 56 ou 57, **caractérisée en ce que** les ordres lus dans la mémoire programme (PS) et qui doivent être exécutés après que la boucle a été quittée ne sont pas encore écrits dans le dispositif (IFIFO) de mémoire d'ordres pendant l'exécution de la boucle.

59. Unité commandée par programme selon l'une des revendications 56 à 58, **caractérisée en ce que** cette dernière compare l'adresse de l'ordre qui doit effectivement être exécuté après que la boucle a été quittée à l'adresse du premier des ordres préparés en vue de leur traitement et contenus dans les registres d'ordres (BR1-BR3) et/ou dans le dispositif (IFIFO) de mémoire d'ordres.
